# EUROPÄISCHE PATENTSCHRIFT

(11) **EP 2 637 905 B1**
(45) Veröffentlichungstag und Bekanntmachung des Hinweises auf die Patenterteilung: **25.02.2015**
(21) Anmeldenummer: 11787606.0
(22) Anmeldetag: 08.11.2011
(51) Int. Cl.: B60T 7/22

(54) **VERFAHREN ZUR ERKENNUNG VON KRITISCHEN FAHRSITUATIONEN VON LASTKRAFT- ODER PERSONENKRAFTWAGEN UND VERFAHREN ZUR VERMEIDUNG VON KOLLISIONEN**
METHOD FOR DETECTING CRITICAL DRIVING SITUATIONS OF LORRIES OR PASSENGER VEHICLES AND METHOD FOR AVOIDING COLLISIONS
PROCÉDÉ DE DÉTECTION DE SITUATIONS DE CONDUITE CRITIQUES DE CAMIONS OU DE VÉHICULES DE TOURISME ET PROCÉDÉ DE PRÉVENTION DE COLLISIONS

(30) Priorität: 12.11.2010 DE 102010051203
(43) Veröffentlichungstag der Anmeldung: 18.09.2013
(73) Patentinhaber: Lucas Automotive GmbH, 56070 Koblenz (DE)
(72) Erfinder: HEINRICHS-BARTSCHER, Sascha, 56566 Neuwied (DE); STELZER, Christian, 56182 Urbar (DE)
(74) Vertreter: Schmidt, Steffen
(86) Internationale Anmeldenummer: PCT/EP2011/005611
(87) Internationale Veröffentlichungsnummer: WO 2012/062451

(56) Entgegenhaltungen:
- EP-A1- 1 559 607
- WO-A2-2009/158223
- DE-A1- 19 510 910
- DE-A1-102005 054 064

## Beschreibung

### Zangen

### Hintergrund und Stand der Technik

Ein Verfahren und ein System zur Erkennung von kritischen Fahrsituationen von Lastkraft- oder Personenkraftwagen dient in der nachstehend beschriebenen Weise insbesondere zur Vermeidung von (Auffahr-)Kollisionen zwischen dem eigenen Fahrzeug und einem vorausfahrenden Fahrzeug. Dieses Verfahren kann dabei ohne Einbeziehung einer vorherbestimmten Notbremsverzögerung arbeiten.

Die Druckschrift DE 41 01 759 A1 zeigt ein automatisches Fahrzeugbremssystem mit einem Geschwindigkeitssensor zum Feststellen der Fahrzeuggeschwindigkeit und einem Abstandssensor zum Feststellen des Abstands zwischen dem Fahrzeug und einem vorausfahrenden Fahrzeug. Das Bremssystem bestimmt auf der Basis der Relativgeschwindigkeit und des Abstands zum vorausfahrenden Fahrzeug eine Grenzzeit, die erforderlich ist, bis das Fahrzeug auf das vorausfahrende Fahrzeug aufprallt, um durch Betätigung einer Alarmvorrichtung dem Fahrer des Fahrzeugs ein Alarmsignal zu geben, wenn bei nicht getretenem Bremspedal die Grenzzeit kürzer als ein Grenzzeitschwellenwert wird. Tritt der Fahrer des Fahrzeugs auf die Abgabe des Alarmsignals hin nicht das Bremspedal, so wird nach Ablauf eines Zeitintervalls ein automatischer Bremsvorgang durchgeführt, um die Fahrzeuggeschwindigkeit zur Vermeidung eines Aufpralls auf das vorausfahrende Fahrzeug soweit zu verringern, bis die Grenzzeit wieder größer als der Grenzzeitschwellenwert ist.

Wenn der Grenzzeitschwellenwert zu kurz ist, kann bei dem automatischen Bremsvorgang ein Aufprall auf das vorausfahrende Fahrzeug nicht immer vermieden werden. Eine ausschließliche Betrachtung der Grenzzeit bis zum Aufprall ist nämlich nicht ausreichend. Daher wird zusätzlich aus der Fahrzeuggeschwindigkeit und dem Reibungskoeffizienten zwischen der Straßenoberfläche und den Fahrzeugreifen ein erforderlicher Anhalteweg des Fahrzeugs bestimmt. Ist die Grenzzeit größer als der vorgegebene Grenzzeitschwellenwert, der Abstand zwischen Fahrzeug und vorausfahrendem Fahrzeug aber kleiner als der bestimmte Anhalteweg, so wird ebenfalls nach Abgabe des Alarmsignals der automatische Bremsvorgang des Fahrzeugs durchgeführt, und zwar solange, bis der Abstand wieder größer als der aktuell bestimmte Anhalteweg ist.

Zur Bestimmung der Grenzzeit und des Anhaltewegs werden Fahr- bzw. Verkehrssituationen hier nur vereinfacht erfasst. In komplexen Verkehrssituationen wird daher ggf. eine Aufprallgefahr auf das vorausfahrende Fahrzeug nicht erkannt oder falsch eingeschätzt. Daher kann das Alarmsignalgeben und gegebenenfalls der automatische Bremsvorgangs zu früh, zu spät, überhaupt nicht oder in unnötiger Weise eingeleitet werden.

Die Druckschrift WO 2004 028847 A1 beschreibt ein Verfahren und eine Vorrichtung zur Auslösung eines selbsttätigen Notbremsvorgangs eines Fahrzeugs insbesondere eines Lastkraftwagens um eine Assistenzfunktion zur Vermeidung eines Auffahrens des Fahrzeugs auf ein vorausfahrendes Fahrzeug bzw. zur Verminderung der Unfallfolgen bei unvermeidbarem Auffahren zu bieten. Eine Fahrerwarnung wird ausgelöst, wenn eine vorgegebene Warnbedingung erfüllt ist. Bei Vorliegen der Warnbedingung ist aufgrund der momentanen Fahrsituation des Fahrzeugs und einer vorgegebenen Notbremsverzögerung bei Ablauf einer vorgegebenen Warnzeitdauer zur Vermeidung eines Auffahrens des Fahrzeugs auf das vorausfahrende Fahrzeug der selbsttätige Notbremsvorgang auszulösen. So soll bei Beendigung des selbsttätigen Notbremsvorgangs eine vorgegebene Zielrelativgeschwindigkeit oder ein Zielsicherheitsabstand zwischen Fahrzeug und vorausfahrendem Fahrzeug erreicht werden. Die momentane Fahrsituation ergibt sich hierbei aus der ermittelten Beschleunigung des Fahrzeugs und der ermittelten Relativbeschleunigung zwischen Fahrzeug und vorausfahrendem Fahrzeug. Diese Größen sollen erlauben, die Gefahr eines Auffahrens des Fahrzeugs auf das vorausfahrende Fahrzeug bei vielen komplexen Verkehrssituationen sicher zu erkennen.

Die vorgegebene Notbremsverzögerung ist dabei eines von insgesamt fünf kumulativ auf ihr Vorliegen geprüften Kriterien zur Auslösung einer Fahrerwarnung. Der selbsttätige Notbremsvorgang wird erst nach Auslösung einer Fahrerwarnung und anschließendem Ablauf einer vorgegebenen Warnzeitdauer ausgelöst. Die Fahrerwarnung ist bei Erfüllung einer vorgegebenen Warnbedingung auszulösen, in die (i) die unter Berücksichtigung der ermittelten Beschleunigung des Fahrzeugs bestimmte Fahrsituation des Fahrzeugs, (ii) eine vorgegebene Notbremsverzögerung, (iii) ein vorgegebener Zielsicherheitsabstand, (iv) eine vorgegebene Zielrelativgeschwindigkeit zwischen Fahrzeug und vorausfahrendem Fahrzeug als Zielbedingungen eingehen, die mit Beendigung des selbsttätigen Notbremsvorgangs zu erreichen sind, und (v) die ermittelte aktuell vorliegende Relativbeschleunigung zwischen Fahrzeug und vorausfahrendem Fahrzeug.

Kritische Fahrsituationen durch geeignete Auswertung von einer entsprechende Rohdaten liefernden Sensoranordnung frühzeitig zu erkennen, erlaubt in einer kritischen Situation Fahrerwarnungen (z. B. akustisch, optisch, haptisch ...) abzugeben und das Fahrzeug zur Unterstützung des Fahrers in einer kritischen Situation (z.B. Beeinflussung eines Bremsassistenten, Vorbefüllen des Bremssystems, ...) vorzukonditionieren.

Die DE 44 01 416 A1 bezieht sich auf eine graduelle Fahrweisenklassifikation zwischen ruhiger und dynamischer Fahrweise, wobei während der Fahrt fahrweisenindikative Messgrößen durch Fahrzeugsensorik abgetastet werden. Mit den erfassten Messwerten wird unter Verwendung eines jeweils zugehörigen, vorab abgespeicherten Messgrößen/Fahrweisen-Kennfeldes wenigstens eine Fahrweisen-Kennziffer ermittelt. Separat werden eine Beschleunigungskennziffer über das Beschleunigungsverhalten, eine Bremskennziffer über das Bremsverhalten und eine Lenkkennziffer über das Lenkverhalten ermittelt, mit denen die Eingangsparameter für Steuer- oder Regelgeräte verschiedener fahrweisenadaptiver Steuer- oder Regelsysteme eines Kraftfahrzeuges in für das jeweilige Steuer- oder Regelgerät spezifisch vorgebbarer Abhängigkeit von den Kennziffern einstellbar sind.

DE 19 510 910 A1 bezieht sich auf ein Messgerät zur Erfassung einer Distanz bzw. eines Abstands zwischen Fahrzeugen, die in der gleichen Richtung fahren, und mit dem ferner überprüft werden soll, ob ein vorbestimmter Sicherheitsabstand zwischen beiden eingehalten wird oder nicht. Ein zugehöriges Warnsystem erzeugt einen Alarm, wenn der momentane Abstand zwischen zwei Fahrzeugen kürzer als der vorbestimmte Sicherheitsabstand ist. Um ein hochgenaues und zuverlässiges Messgerät zur Erfassung des Sicherheitsabstands zwischen Fahrzeugen zu erfassen, der auf den jeweiligen Fahrer zugeschnitten ist, indem das individuelle Wahrnehmungsvermögen und die physischen Fähigkeiten des betreffenden Fahrers berücksichtigt werden, hat das Messgerät eine erste Einrichtung zum Erhalten eines "persönlichen Zwischenraums" entsprechend der Fahrzeuggeschwindigkeit eines mit dem Messgerät ausgerüsteten Fahrzeugs. Der "persönliche Zwischenraum" ist dabei eine von dem Fahrer als beunruhigend bzw. unzureichend empfundene Distanz. Eine zweite Einrichtung ermittelt eine während der Reaktionszeit zurückgelegte Fahrtstrecke aus einer Reaktionszeit bis zur Bremsbetätigung durch den Fahrer und einer Relativgeschwindigkeit zwischen einem voraus fahrenden Fahrzeug und dem mit dem Messgerät ausgerüsteten bzw. dem eigenen Fahrzeug. Eine dritte Einrichtung ermittelt einen Bremsweg aus der Betätigungskraft des Bremspedals beim Bremsvorgang durch den Fahrer und der Relativgeschwindigkeit. Eine vierte Einrichtung ermittelt eine Referenzdistanz aus dem von der ersten Einrichtung ermittelten persönlichen Abstand, der von der zweiten Einrichtung ermittelten reaktionszeitbedingten Fahrtstrecke und dem von der dritten Einrichtung ermittelten Bremsweg. Eine fünfte Einrichtung entscheidet, ob ein momentaner Abstand zwischen dem vorausfahrenden Fahrzeug und dem mit dem Messgerät ausgerüsteten Fahrzeug kleiner ist als die von der vierten Einrichtung ermittelte Referenzdistanz.

Die DE 19 921 238 A1 betrifft ein Sicherheits-Fahrsteuersystem für ein Fahrzeug, das mögliche Verzögerungen eines vor dem Fahrzeug befindlichen Hindernisses vorhersagt oder vorwegnimmt, um unter Verwendung der vorhergesagten Verzögerungen eine Kontakt-Vermeidungssteuerung durchzuführen. Dieses System soll in der Lage sein, mögliche Verzögerungen in mehreren Werten vorherzusagen oder vorweg zu nehmen, die von einem Hindernis, (z.B. einem vorausfahrenden Fahrzeug) erzeugt werden. Aus den vorhergesagten Verzögerungen soll die Hindernisvermeidungssteuerung durchführt werden, um hierdurch die Steuerung relativ einfach zu machen und trotzdem zu ermöglichen, dass die Steuerung an die Erwartungen des Fahrers angepasst ist.

Hierzu wird ein Hindernis erfasst, das sich vor dem eigenen Fahrzeug auf dem Fahrweg befindet. Parameter werden erfasst, welche die Bewegung des Fahrzeugs einschließlich der Geschwindigkeit des Fahrzeugs anzeigen. Der Zustand des Hindernisses relativ zu dem Fahrzeug wird erfasst. Es wird bestimmt, ob ein Alarm oder/und eine Kontaktvermeidung mit dem Hindernis betrieben werden soll. Eine Mehrzahl von Verzögerungen, die das Hindernis erzeugen könnte, werden auf der Basis der erfassten Parametern (insbesondere der erfassten Fahrzeuggeschwindigkeit, wenn das eigene Fahrzeug nicht mit konstanter Beschleunigung fährt) und dem erfassten Relativzustand vorhergesagt. Basierend auf zumindest den vorhergesagten Verzögerungen wird bestimmt, ob ein Alarm oder/und eine Kontaktvermeidung mit dem Hindernis betrieben werden soll.

Die DE 10 2005 014 803 A1 betrifft eine Steuerung eines Kollisionsvermeidungssystems um den Fahrer rechtzeitig zu warnen, wenn z.B. der Abstand zwischen seinem Fahrzeug und einem Hindernis zu gering wird. Um Kollisionen zu vermeiden, berechnet das System in Abhängigkeit von der Relativgeschwindigkeit zwischen dem Fahrzeug und dem Hindernis einen Minimalabstand zwischen dem Fahrzeug und dem Hindernis, innerhalb dessen das Fahrzeug zum Stehen kommen muss. Der Minimalabstand entspricht einer minimalen Kollisionsvermeidungszeit. Unterschreitet diese minimale Kollisionsvermeidungszeit einen vorgegebenen Grenzwert, so gibt das System eine Warnung aus. Um zu differenzieren, ob sich der Fahrer eine dynamischere Fahrweise zutraut, bei der überflüssige Warnsignale als störend empfunden werden, oder ob er eine beschaulicherer Fahrweise bevorzugt und daher frühzeitig gewarnt werden will, wenn er sich einem Hindernis nähert, um dann rechtzeitig und ohne allzu abrupte Änderungen eines oder mehrerer Fahrparameter dem Hindernis ausweichen zu können, ist das System adaptiv ausgestaltet. Anhand der Reaktion des Fahrers auf die ersten Warnhinweise wird die Schwelle für das Erzeugen von Warnsignalen durch das System so angepasst, dass zukünftige Warnhinweise nur dann erfolgen, wenn sie für den individuellen Fahrer erforderlich sind. Dazu wird ein Hindernisabstand zwischen dem Kraftfahrzeug und einem Hindernis vor dem Kraftfahrzeug durch einen Umfeldsensor erfasst. Aus dem Hindernisabstand und einer Relativgeschwindigkeit des Kraftfahrzeugs gegenüber dem Hindernis wird eine minimale Kollisionsvermeidungszeit ermittelt. Ein erstes Warnsignal wird ausgegeben, wenn die minimale Kollisionsvermeidungszeit einen ersten Schwellenwert unterschreitet. Eine Reaktion des Fahrers wird erfasst und der erste Schwellenwert in Abhängigkeit von der Zeitdauer zwischen dem Warnsignal und der Reaktion des Fahrers angepasst.

Die 10 2005 054 064 betrifft ein Verfahren zur Vermeidung einer Kollision eines Fahrzeugs mit einem sich auf der Fahrspur des Fahrzeugs befindenden Hindernis sowie eine Warnvorrichtung, um die Häufigkeit von Fehlauslösungen gering zu halten. Dabei wird zur Vermeidung einer Kollision eines Fahrzeugs mit einem sich auf der Fahrspur des Fahrzeugs befindenden potentiellen Hindernis eine freie Wegstrecke des Fahrzeugs durch Erfassung des Abstands zwischen dem Fahrzeug und Hindernis ermittelt, die Länge einer vom Fahrzeug während einer Vollbremsung bis zum Fahrzeugstillstand zurückgelegten Fahrstrecke als Bremsweg berechnet und eine Kollisionswarnung und/oder ein Bremseingriff in Abhängigkeit der ermittelten freien Wegstrecke und des berechneten Bremswegs ausgelöst. Die Berechnung des Bremswegs basiert dabei auf der Auswertung von Bewegungsgleichungen, die ihrerseits auf der Annahme eines zeitabhängigen hypothetischen Beschleunigungsprofils beruhen, das näherungsweise den zeitlichen Beschleunigungsverlauf des Fahrzeugs darstellt, der erwartet wird, wenn zum aktuellen Zeitpunkt eine Vollbremsung eingeleitet würde. Dazu werden die Beschleunigung und der Beschleunigungsgradient des Fahrzeugs fortlaufend ermittelt und das hypothetische Beschleunigungsprofil in Abhängigkeit der aktuellen Beschleunigung und des aktuellen Beschleunigungsgradienten definiert. Das hypothetische Beschleunigungsprofil kann auch durch mehrere lineare Abschnitte angenähert sein.

Um dem Bremsweg zu berechnen, wird anhand eines dem hypothetischen Beschleunigungsprofil zugehörigen Geschwindigkeitsprofils eine bis zum Fahrzeugstillstand voraussichtlich benötigte Zeit berechnet und anhand eines dem hypothetischen Beschleunigungsprofil zugehörigen Fahrstreckenlängenprofils die Länge einer während dieser Zeit zurückgelegten Fahrstrecke berechnet.

Anhand einer definierten Abstandsschwelle wird die Kollisionswarnung oder der Bremseingriff ausgelöst, wenn die freie Wegstrecke kleiner ist als der berechnete Bremsweg zuzüglich der Abstandsschwelle. Die Abstandsschwelle kann gleich einem Reaktionsweg sein, der der Länge einer vom Fahrzeug während einer vorgegebenen Fahrerreaktionszeit zurückgelegten Fahrstrecke entspricht, wobei die Fahrerreaktionszeit in Abhängigkeit von aktuellen Betätigungszuständen eines Fahrpedals und Bremspedals des Fahrzeugs vorgegeben wird.

Eine Kollisionswarnung oder ein Bremseingriff kann auch nur dann ausgelöst werden, wenn zusätzlich noch mindestens das Fahrzeug sich auf einer Rückwärtsfahrt befindet, die freie Wegstrecke ist grösser als eine vorgegebene Schwelle, oder die Fahrgeschwindigkeit grösser ist als eine vorgegebene Geschwindigkeitsschwelle. Die Warneinrichtung kann Bestandteil eines Einparkhilfesystems zur Unterstützung des Fahrers beim Einparken sein.

Die DE 10 2006 043 676 betrifft ein Fahrerassistenzsystem (z.B. Spurverlassenswarnsystem oder Kollisionswarnsystem) mit einer Warnfunktion, die den Fahrer auf gefährliche Verkehrssituationen hinweist. Mit bekannten, derartigen Warnsysteme lässt sich die Verkehrssituation mit der verfügbaren Sensorik oft nicht präzise genug bewerten. Dies führt relativ häufig zu störenden Fehlwarnungen. Um dies zu vermeiden wird Fahrdynamik des Fahrzeugs und die darin zum Ausdruck kommenden Aktionen oder Reaktionen des Fahrers Aufschlüsse über die Aufmerksamkeit des Fahrers ausgewertet. Stärkere Längs- oder Querbeschleunigungen, die außerhalb eines Komfortbereiches liegen, werden als deutliches Indiz für eine erhöhte Fahreraufmerksamkeit gewertet, wenn sie mit einer vom Assistenzsystem erkannten Gefahrensituation korrelieren. In einer Situation, in der normalerweise ein Warnsignal ausgegeben würde, werden außerhalb des Komfortbereiches liegende Fluktuationen der Längs- oder Querdynamik als hohe Aufmerksamkeit des Fahrers gewertet und ein Warnhinweis unterdrückt. Auf diese Weise lässt sich die Häufigkeit von Fehlwarnungen deutlich vermindern und damit die Akzeptanz des Warnsystems steigern.

Die DE 10 2006 046 697 betrifft das frühzeitigen Erkennen gefährlicher Situationen im Kreuzungsbereich von Straßen um die betroffenen Verkehrsteilnehmer frühzeitig zu warnen, sobald die Gefahr von Konflikten oder Kollisionen gegeben ist. Dazu werden Positionsdaten der im Kreuzungsbereich befindlichen Verkehrsteilnehmer erfasst und ausgewertet, um eine Prognose der zu erwarteten Bewegungslinien der Verkehrsteilnehmer zu erstellen und um anhand der Prognose zu bestimmen, ob Konflikte oder Kollisionen zwischen den Verkehrsteilnehmern drohen, zu deren Verhinderung Gegenmaßnahmen eingeleitet werden. In die Positionsdaten erden Geschwindigkeitsdaten oder Beschleunigungsdaten der Verkehrsteilnehmer miteinbezogen. Bei Fahrzeugen wird auf Basis der Positionsdaten eine Fahrspur des Fahrzeugs in der Kreuzung bestimmt, wobei Abbiegebeziehungen für das Fahrzeug berücksichtigt werden, indem soweit vorhanden, zusätzliche Daten des Fahrzeugs ausgewertet werden. Für jeden Verkehrsteilnehmer werden eigene Trajektorien bestimmt und deren Schnittpunkte ermittelt werden, die mögliche Konfliktpunkte darstellen. Bei Vorliegen von Konfliktpunkten werden die Gegenmaßnahmen, insbesondere eine Warnung der betroffenen Verkehrsteilnehmer, eingeleitet. Die Konfliktpunkte werden unter Berücksichtigung möglicher Brems- oder Beschleunigungsaktionen der Verkehrsteilnehmer berechnet.

Die EP 1 559 607 A1 betrifft eine Kollisions-Warnung bei einem Kraftfahrzeug, das mit einem Abstandssensor ausgerüstet ist, und das in der Lage ist, ein verlässliches Warnsignal für den Fahrer zu generieren, falls voraussichtlich am Ende einer ACC-Bremsung oder nach einer Fahrer-Bremsung ein Restabstand zum vorausfahrenden Fahrzeug nicht eingehalten werden kann. Dazu wird in einer Auswerteeinrichtung ständig diejenige Fahrzeug-Verzögerung berechnet, die nach Ablauf einer Fahrer-Reaktionszeit vom Fahrzeug aufgebracht werden muss, um einen Restabstand zum vorausfahrenden Fahrzeug einhalten zu können. Falls die berechnete Verzögerung betragsmäßig oberhalb einer angenommenen, durch eine Fahrerbremsung erzeugbaren Fahrzeug-Verzögerung liegt, wird ein Kollisions- Warnsignal ausgegeben. Eine Systemgrenzenwarnung wird ausgegeben, falls eine mit einer Fahrer-Reaktionszeit von null berechnete Fahrzeug-Verzögerung betragsmäßig oberhalb einer vom ACC realisierbaren Fahrzeug-Verzögerung liegt.

Die WO 2002/043029 betrifft die Erfassung der Fahrbedingungen eines vorausfahrenden Fahrzeugs sowie die Erfassung der Fahrbedingungen eines nachfahrenden Fahrzeugs und die Erfassung eines Fahrzeugabstands zwischen dem nachfahrenden Fahrzeug und dem vorausfahrenden Fahrzeug. Der nahesten Annäherungsabstands zwischen dem nachfahrenden Fahrzeug und dem vorausfahrenden Fahrzeug wird auf der Basis der erfassten Fahrbedingung des vorausfahrenden Fahrzeugs, des nachfahrenden Fahrzeugs, und des erfassten Fahrzeugabstands vorausgesagt. Ein geeigneter Fahrzeugabstand wird bestimmt aus dem Fahrzeugabstand zwischen dem vorausfahrenden und dem nachfahrenden Fahrzeug. Eine Warnung oder eine Bremskraft wird erzeugt, wenn der vorausgesagte Nächstannäherungsabstand kleiner als der vorbestimmte geeignete Fahrzeugabstand ist.

Eine Sollverzögerung, die zur Aufrechterhaltung des geeigneten Fahrzeugabstands erforderlich ist, wird bestimmt. Die Geschwindigkeit und die Verzögerung des vorausfahrenden und des nachfahrenden Fahrzeugs werden bestimmt. Der naheste Annäherungsabstand wird aus der erfassten Geschwindigkeit des vorausfahrenden Fahrzeugs, der erfassten Verzögerung des vorausfahrenden Fahrzeugs, der erfassten Geschwindigkeit des nachfahrenden Fahrzeugs und des erfassten Fahrzeugabstands voraussagt. Die Bremskraft wird erzeugt, um die erfasste Verzögerung des nachfahrenden Fahrzeugs an die berechnete Sollverzögerung zu machen, wenn der vorausgesagte Nächstannäherungsabstand kleiner als der vorbestimmte geeignete Fahrzeugabstand wird.

Die WO 1999/042347 betrifft eine Fahrzeugbremsensteuerung, die ungewollten Kontakt des Fahrzeugs mit einem Objekt vermeiden soll, während der automatische Bremsbetrieb nicht den Fahrer stören soll. Dazu wird ein sich in der Bewegungsrichtung des Fahrzeugs vor dem Fahrzeug befindliches Objekt erfasst. Die Möglichkeit eines Kontakts des Fahrzeugs mit dem Objekt wird aus der relativen Positionsbeziehung zwischen dem Fahrzeug und dem Objekt bestimmt. Eine Bremsvorrichtung führt auf der Basis des Ergebnisses der Bestimmung einen automatischen Bremsvorgang aus. Ein Bremswunsch des Fahrers wird bestimmt. Die vom Fahrer durchgeführte Bremsbetätigung wird durch die Bremse unterstützt, wenn während des automatischen Bremsbetriebs der Bremswunsch des Fahrers erfasst wird.

Der Bremswunsch des Fahrers wird aus der Druckbetätigung eines Bremspedals durch den Fahrer oder des Rückstellbetriebs eines Gaspedals oder der Bewegung eines Fußes des Fahrers zum Bremspedal hin erfasst. Vor dem Start des automatischen Bremsbetriebs wird an den Fahrer eine Warnung ausgegeben. Der Bremswunsch des Fahrers wird aus der Druckbetätigung des Bremspedals oder des Rückstellbetriebs des Gaspedals durch den Fahrer oder der Bewegung des Fahrerfußes zum Bremspedal hin innerhalb einer vorbestimmten Zeitdauer nach Ausgabe der Warnung erfasst. Die Unterstützung der Bremsbetätigung des Fahrers ist, vor der Erfassung des Bremswunsches des Fahrers die Bremskraft beizubehalten oder die Bremskraft in dem automatischen Bremsbetrieb zu erhöhen.

### Zugrunde liegende Aufgabe

Kritische Situationen von Lastkraft- oder Personenkraftwagen sollen noch sicherer erkannt, der Fahrer daraufhin gewarnt und/oder das Fahrzeug zur Unterstützung des Fahrers für einen Notbremsvorgang vorbereitet werden. Fehlerhafte Warnungen und Eingriffe sollen möglichst nicht auftreten.

### Lösung

Zur Lösung dieser Aufgabe wird ein Verfahren zur Erkennung von kritischen Fahrsituationen von Kraftwagen vorgeschlagen, insbesondere zur Vermeidung von Kollisionen mit einem vor einem eigenen Fahrzeug befindlichen Objekt. Dieses Verfahren hat folgende Schritte:
Vorgeben eines von Fahrgrößen des eigenen Fahrzeuges abhängigen Beschleunigungsprofils;
Annehmen eines zeitlichen Verlaufs einer vorherzusehenden Beschleunigung des eigenen Fahrzeuges basierend auf dessen aktueller Beschleunigung;
Bestimmen eines Wegprofils des eigenen Fahrzeuges aus dem zeitlichen Verlauf der vorherzusehenden Beschleunigung;
Erfassen eines aktuellen Abstandes und einer aktuellen relativen Geschwindigkeit eines vor dem eigenen Fahrzeug befindlichen Objektes;
Annehmen eines zeitlichen Verlaufs einer vorherzusehenden Beschleunigung des Objekts basierend auf dessen aktueller Beschleunigung;
Bestimmen eines Wegprofils des Objektes aus dem zeitlichen Verlauf der vorherzusehenden Beschleunigung;
Vergleichen des Wegprofils des eigenen Fahrzeugs mit dem Wegprofil des Objektes; und,
falls sich die beiden Wegprofile schneiden, Bestimmen eines voraussichtlichen Kollisionszeitpunkts des eigenen Fahrzeuges mit dem Objekt;
Vergleichen eines Zeitpunkts mit dem bestimmten voraussichtlichen Kollisionszeitpunkt des eigenen Fahrzeuges mit dem Objekt; und,
falls der voraussichtliche Kollisionszeitpunkt vor diesem Zeitpunkt liegt, Ausgeben einer Warnung an den Fahrer des eigenen Fahrzeuges.

Das Bestimmen des Wegprofils des eigenen Fahrzeuges aus dem zeitlichen Verlauf der vorherzusehenden Beschleunigung kann durch
Bestimmen eines Geschwindigkeitsprofils des eigenen Fahrzeuges durch Integration des angenommenen Beschleunigungsprofils; und / oder
Bestimmen des Wegprofils des eigenen Fahrzeuges durch Integration des bestimmten Geschwindigkeitsprofils erfolgen.

Das Bestimmen des Wegprofils des Objektes aus dem zeitlichen Verlaufs der vorherzusehenden Beschleunigung kann durch
Bestimmen eines Geschwindigkeitsprofils des Objektes durch Integration des angenommenen Beschleunigungsprofils; und / oder
Bestimmen des Wegprofils des Objektes durch Integration des bestimmten Geschwindigkeitsprofils des Objektes erfolgen.

Das Vorgeben eines von Fahrgrößen des eigenen Fahrzeuges abhängigen Beschleunigungsprofils kann eine erfasste oder berechnete aktuelle Fahrzeugbeschleunigung und / oder eine erfasste oder berechnete aktuelle Fahrzeuggeschwindigkeit eines eigenen Fahrzeuges berücksichtigen.

Das Annehmen eines zeitlichen Verlaufs einer vorherzusehenden Beschleunigung des vorausbefindlichen Objekts kann ein Berechnen oder Bestimmen der aktuellen absoluten Geschwindigkeit des Objektes und / oder der absoluten aktuellen Beschleunigung des Objektes umfassen.

Das Vergleichen des Zeitpunkts mit dem bestimmten voraussichtlichen Kollisionszeitpunkt des eigenen Fahrzeuges mit dem vorausbefindlichen Objekt kann ein Festlegen eines Zeitpunkts vor dem voraussichtlichen Kollisionszeitpunkt umfassen.

Das Annehmen eines zeitlichen Verlaufs einer vorherzusehenden Fahrzeugbeschleunigung des eigenen Fahrzeuges für einen vorherbestimmten Zeitraum kann basierend auf der aktuellen Fahrzeugbeschleunigung des eigenen Fahrzeuges und / oder aus dem zeitlichen Verlauf der Beschleunigung des eigenen Fahrzeuges während eines in die Vergangenheit reichenden Zeitraums vorherbestimmter Länge erfolgen.

Das Annehmen eines zeitlichen Verlaufs eines vorherzusehenden, von Fahrgrößen des eigenen Fahrzeuges abhängigen Beschleunigungsprofils kann abhängig von dessen aktueller Geschwindigkeit erfolgen, wobei dem Beschleunigungsprofil als Startwert die aktuelle Fahrzeugbeschleunigung zugewiesen wird und das Beschleunigungsprofil bei hoher Geschwindigkeit langsam abnimmt und bei geringer Geschwindigkeit schnell abnimmt.

Das Annehmen eines zeitlichen Verlaufs einer vorherzusehenden Fahrzeugbeschleunigung des vorausbefindlichen Objektes kann für einen vorherbestimmten Zeitraum basierend auf dessen aktueller Beschleunigung des vorausfahrenden Fahrzeuges und ggf. aus dem zeitlichen Verlauf der Fahrzeugbeschleunigung des vorausfahrenden Fahrzeuges während eines in die Vergangenheit reichenden Zeitraums vorherbestimmter Länge erfolgen.

Das Annehmen eines zeitlichen Verlaufs eines vorherzusehenden, von Fahrgrößen des vorausbefindlichen Objektes abhängigen Beschleunigungsprofils kann abhängig von dessen aktueller Geschwindigkeit erfolgen, wobei dem Beschleunigungsprofil als Startwert die aktuelle Beschleunigung des Objektes zugewiesen wird und das Beschleunigungsprofil bei hoher Geschwindigkeit langsam abnimmt und bei geringer Geschwindigkeit schnell abnimmt.

Bei der Annahme des zeitlichen Verlaufs der vorherzusehenden Beschleunigung des eigenen Fahrzeuges kann unterschieden werden, ob dessen aktuelle Beschleunigung positiv, Null oder negativ ist, und,
falls die aktuelle Beschleunigung des eigenen Fahrzeuges positiv ist, dann wird für den zeitlichen Verlauf angenommen, dass die vorherzusehende Fahrzeugbeschleunigung in dem vorherbestimmten Zeitraum abnimmt, wobei vorzugsweise der zeitliche Verlauf an die aktuelle Fahrsituation, vorzugsweise an die aktuelle Geschwindigkeit des eigenen Fahrzeuges adaptiert wird;
falls die aktuelle Beschleunigung des eigenen Fahrzeuges negativ ist, dann wird angenommen, dass die vorherzusehende Beschleunigung des eigenen Fahrzeuges in dem vorherbestimmten Zeitraum konstant verläuft; und
falls die aktuelle Beschleunigung des eigenen Fahrzeuges Null ist, dann wird angenommen, dass die vorherzusehende Beschleunigung des eigenen Fahrzeuges in dem vorherbestimmten Zeitraum konstant verläuft.

Bei der Annahme des zeitlichen Verlaufs der vorherzusehenden Beschleunigung des vorausbefindlichen Objektes kann unterschieden werden, und falls die aktuelle Beschleunigung des Objektes positiv ist, dann wird für den zeitlichen Verlauf angenommen, dass die vorherzusehende Beschleunigung des vorausbefindlichen Objektes in dem vorherbestimmten Zeitraum konstant verläuft;
falls die aktuelle Beschleunigung des vorausbefindlichen Objektes negativ ist, dann wird für den zeitlichen Verlauf angenommen, dass die vorherzusehende Beschleunigung des vorausbefindlichen Objektes in dem vorherbestimmten Zeitraum abnimmt, wobei vorzugsweise der zeitliche Verlauf an die aktuelle Fahrsituation, vorzugsweise an die aktuelle Geschwindigkeit des vorausbefindlichen Objektes adaptiert wird;
falls die aktuelle Fahrzeugbeschleunigung des vorausbefindlichen Objektes Null ist, dann wird angenommen, dass die vorherzusehende Beschleunigung des vorausbefindlichen Objektes in dem vorherbestimmten Zeitraum konstant verläuft.

Zusätzlich oder alternativ zum Ausgeben einer Warnung an den Fahrer des eigenen Fahrzeuges kann eine zum Beispiel optische oder akustische Warnung an nachfolgende Verkehrsteilnehmer ausgegeben werden.

Zur Vermeidung von Kollisionen mit einem vor einem eigenen Fahrzeug befindlichen Objekt können folgende Schritte ausgeführt werden:
Vorgeben eines von Fahrgrößen des eigenen Fahrzeuges abhängigen Beschleunigungsprofils;
Annehmen eines zeitlichen Verlaufs einer vorherzusehenden Beschleunigung des eigenen Fahrzeuges basierend auf dessen aktueller Beschleunigung;
Bestimmen eines Wegprofils des eigenen Fahrzeuges aus dem zeitlichen Verlaufs der vorherzusehenden Beschleunigung;
Erfassen eines aktuellen Abstandes und einer aktuellen relativen Geschwindigkeit eines vor dem eigenen Fahrzeug befindlichen Objektes;
Annehmen eines zeitlichen Verlaufs einer vorherzusehenden Beschleunigung des vorausbefindlichen Objekts basierend auf dessen aktueller Beschleunigung;
Bestimmen eines Wegprofils des Objektes aus dem zeitlichen Verlaufs der vorherzusehenden Beschleunigung;
Vergleichen des Wegprofils des eigenen Fahrzeugs mit dem Wegprofil des vorausbefindlichen Objektes; und
falls sich die beiden Wegprofile schneiden oder die Geschwindigkeit des eigenen Fahrzeugs mit der des Objektes zumindest innerhalb eines Toleranzbandes übereinstimmt, Bestimmen eines voraussichtlichen Kollisionszeitpunkts des eigenen Fahrzeuges mit dem Objekt,
Vergleichen eines Zeitpunkts mit dem bestimmten voraussichtlichen Kollisionszeitpunkt; und falls die Geschwindigkeit des eigenen Fahrzeugs mit der des vorausbefindlichen Objektes zumindest innerhalb eines Toleranzbandes übereinstimmt, wird ein Restabstand des eigenen Fahrzeugs von dem Objekt und der Geschwindigkeitsabbau bis zu dem Zeitpunkt ermittelt, und,
falls der Geschwindigkeitsabbau einen Wert unterschreitet und der Restabstand ebenfalls einen Wert unterschreitet, wird eine fahrerunabhängige (Not-)Bremsung eingeleitet.

Das Vorgeben eines von Fahrgrößen des eigenen Fahrzeuges abhängigen Beschleunigungsprofils kann eine erfasste oder berechnete aktuelle Fahrzeugbeschleunigung und / oder eine erfasste oder berechnete aktuelle Fahrzeuggeschwindigkeit eines eigenen Fahrzeuges berücksichtigen.

Falls der voraussichtliche Kollisionszeitpunkt vor dem festgelegten Zeitpunkt liegt, werden die Restgeschwindigkeit des eigenen Fahrzeugs relativ zum vorausbefindlichen Objekt zu dem voraussichtlichen Kollisionszeitpunkt und der mögliche Geschwindigkeitsabbau bis zu dem voraussichtlichen Kollisionszeitpunkt ermittelt.

Das Annehmen eines zeitlichen Verlaufs einer vorherzusehenden Beschleunigung des vorausbefindlichen Objekts kann ein Berechnen oder Bestimmen der aktuellen absoluten Geschwindigkeit des vorausbefindlichen Objektes und / oder der absoluten aktuellen Beschleunigung des Objektes umfassen.

Das Vergleichen des Zeitpunkts mit dem bestimmten voraussichtlichen Kollisionszeitpunkt des eigenen Fahrzeuges mit dem vorausbefindlichen Objekt ein Festlegen eines Zeitpunkts vor dem voraussichtlichen Kollisionszeitpunkt umfasst.

Das Annehmen eines zeitlichen Verlaufs einer vorherzusehenden Beschleunigung des Objektes für einen vorherbestimmten Zeitraum basierend auf dessen aktueller Beschleunigung und / oder aus dem zeitlichen Verlauf der Fahrzeugbeschleunigung des vorausbefindlichen Objektes während eines in die Vergangenheit reichenden Zeitraums vorherbestimmter Länge erfolgen.

Das Annehmen eines zeitlichen Verlaufs eines vorherzusehenden, von Fahrgrößen des eigenen Fahrzeuges abhängigen Beschleunigungsprofils, kann auf Grundlage einer realen Systemantwort des eigenen Fahrzeugs bei einer vorgegebenen Notbremsverzögerung erfolgen.

Aus dem zeitlichen Verlauf der Beschleunigung des vorausfahrenden Objektes sowie des eigenen Fahrzeugs werden die Wegverläufe für das eigene und das vorausbefindliche Objekt ermittelt.

Das Untersuchen der beiden Wegprofile im Verhältnis zu einander kann das Suchen eines Zeitpunktes umfassen, an dem entweder beide Wegprofile einen gemeinsamen Schnittpunkt aufweisen oder das eigene und das vorausbefindliche Objekt einen minimalen Abstand zueinander aufweisen.

Bei Vorliegen eines Schnittpunktes der beiden Wegprofile werden (i) der Zeitpunkt des Schnittpunktes, (ii) der Restweg bis zur Kollision und/oder die Restgeschwindigkeit zum Zeitpunkt der potentiellen Kollision, und (iii) der Geschwindigkeitsabbau bis zu dem Zeitpunkt der potentiellen Kollision ermittelt, und
sofern sich die Wegprofile nicht schneiden, aber das eigene und das vorausbefindliche Objekt zueinander einen minimalen Abstand haben, werden (i) der Restabstand zwischen eigenem Fahrzeug und vorausbefindlichen Objekt zu diesem Zeitpunkt und/oder (ii) der Geschwindigkeitsabbau des eigenen Fahrzeuges bis zu diesem Zeitpunkt ermittelt.

Das Ermitteln eines Geschwindigkeitsabbaus kann auf Grundlage der zuvor ermittelten Zeitpunkte erfolgen, wobei vorzugsweise der Geschwindigkeitsabbau des eigenen Fahrzeuges vorzugsweise auf Grundlage einer realen Systemantwort des eigenen Fahrzeugs bei einer Notbremsanforderung berücksichtigt wird und der Geschwindigkeitsabbau bis zum Erreichen des Restabstandes zu diesem Zeitpunkt durch Integration der Beschleunigung des eigenen Fahrzeuges zwischen den Integrationsgrenzen t = 0 und t = T_{mindist} ermittelt wird.

Dabei kann als eine erste Bedingung für ein Einleiten eines fahrerunabhängigen Notbremsvorgangs ein Unterschreiten eines vorgebbaren Mindestabstandes zwischen dem eigenen und dem vorausbefindlichen Objekt sein, und / oder eine zweite Bedingung für ein Einleiten eines fahrerunabhängigen Notbremsvorgangs kann das Unterschreiten eines vorgebbaren Geschwindigkeitsabbaus des eigenen Fahrzeuges bis zum Kollisionszeitpunkt t = T_{K} sein, bei dem das eigene Fahrzeug mit dem vorausbefindlichen Objekt kollidiert.

Ein Zeitpunkt für eine Warnung oder andere kollisionsvorbereitende Maßnahmen kann abhängig von Fahreraktivitäten, dem aktuellen Fahrszenario und aktuellen Umweltbedingungen früher oder später festgelegt werden.

Zusätzlich oder alternativ zur Warnungsausgabe an den Fahrer des eigenen Fahrzeuges kann eine optische und / oder akustische Warnung an nachfolgende Verkehrsteilnehmer ausgegeben werden.

### Kurzbeschreibung der Zeichnungen

Die vorstehend erläuterten Verfahrensdetails sind im Zusammenhang dargestellt. Es sei jedoch darauf hingewiesen, dass sie auch unabhängig von einander sind und auch frei miteinander kombinierbar sind. Die in den Fig. gezeigten Abläufe sind nicht einschränkend sondern illustrativ zu verstehen. Auch können einzelne Teilschritte abweichend von der gezeigten Reihenfolge abgearbeitet werden und auch von den gezeigten abweichen.
Fig. 1 zeigt ein Übersichts-Flussdiagramm eines Verfahrens zur Erkennung von kritischen Fahrsituationen von Lastkraft- oder Personenkraftwagen zur Vermeidung von (Auffahr-)Kollisionen zwischen dem eigenen Fahrzeug und einem vor dem eigenen Fahrzeug fahrenden Fahrzeug oder Objekt.
Fig. 2 zeigt ein Flussdiagramm eines Teilaspekts des Verfahrens nach Fig. 1, bei dem das eigene Fahrzeug betrachtet wird.
Fig. 3 zeigt ein Flussdiagramm eines Teilaspekts des Verfahrens nach Fig. 1, bei dem das vor dem eigenen Fahrzeug befindliche Fahrzeug oder Objekt betrachtet wird.
Fig. 4 zeigt ein schematisches Diagramm der Abläufe des Verfahrens nach Fig. 2, bei dem das eigene Fahrzeug betrachtet wird.
Fig. 5 zeigt ein schematisches Diagramm der Abläufe des Verfahrens nach Fig. 3, bei dem das vor dem eigenen Fahrzeug befindliche Fahrzeug oder Objekt betrachtet wird.
Fig. 6 zeigt ein schematisches Diagramm der Abläufe des Verfahrens um zu ermitteln, ob eine Warnung an den Fahrer des eigenen Fahrzeuges ausgegeben wird.
Fig. 7 zeigt ein schematisches Diagramm der Abläufe des Verfahrens um zu ermitteln, ob eine fahrerunabhängige Notbremsung des eigenen Fahrzeuges eingeleitet wird. Hierbei können zwei Bedingungen für das Einleiten einer Notbremsung berücksichtigt werden: Ein Restabstand des eigenen Fahrzeugs von dem Objekt und / oder ein Geschwindigkeitsabbau bis zu einem Kollisions- oder Minimalabstands-Zeitpunkt.
Fig. 8 veranschaulicht schematisch den modularen Aufbau zu den funktionalen Zusammenhang zwischen der Ermittlung der Fahrerwarnung und einer anschließend, nach Ablauf der Warnzeitdauer, festzustellenden Notwendigkeit einer Notbremsung und deren anschließendem Auslösen.
Fig. 9 veranschaulicht schematisch die Situation eines vor dem eigenen Fahrzeug vorausfahrenden Fahrzeuges und die mittels eines Radarsensors am eigenen Fahrzeug in dieser Situation zu ermittelnden Daten.

### Detaillierte Beschreibung der Zeichnungen

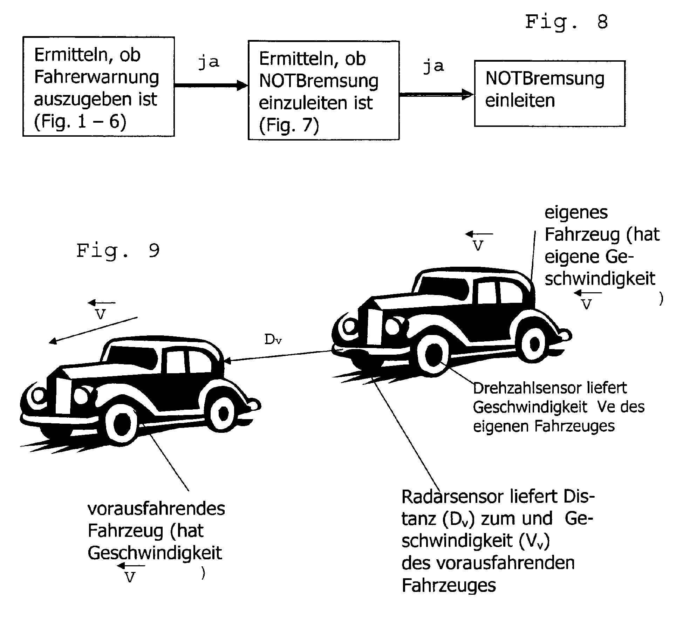

Wie Fig. 9 veranschaulicht, wird mittels eines Radarsensors die Situation eines vor dem eigenen Fahrzeug vorausfahrenden Fahrzeuges erfasst; damit kann die Absolutgeschwindigkeit des vorausfahrenden Fahrzeuges aus der Relativgeschwindigkeit des vorausfahrenden Fahrzeuges und der mittels Raddrehzahlsensoren des eigenen Fahrzeuges erfassten Absolutgeschwindigkeit des eigenen Fahrzeuges ermittelt werden. Außerdem liefert der Radarsensor den Abstand zwischen dem vorausfahrenden Fahrzeug und dem eigenen Fahrzeug. Des weiteren kann aus diesen Daten auch die Beschleunigung des vorausfahrenden Fahrzeuges bestimmt werden.

Fig. 8 zeigt, wie bei der vorliegend beschriebenen Vorgehensweise die beiden Funktionen "Ermittlung der Notwendigkeit einer Fahrerwarnung" und "Feststellen der Notwendigkeit einer Notbremsung" modular gestaltet sein können und nacheinander ausgeführt werden können. Dabei kann das "Feststellen der Notwendigkeit einer Notbremsung" und deren anschließendes Auslösen auch weggelassen sein; umgekehrt erlaubt die hier vorgestellte Vorgehensweise auch, die "Ermittlung der Notwendigkeit einer Fahrerwarnung" nicht auszuführen und unmittelbar in der veranschaulichten Weise die Schritte für das "Feststellen der Notwendigkeit einer Notbremsung" und deren anschließendes Auslösen auszuführen.

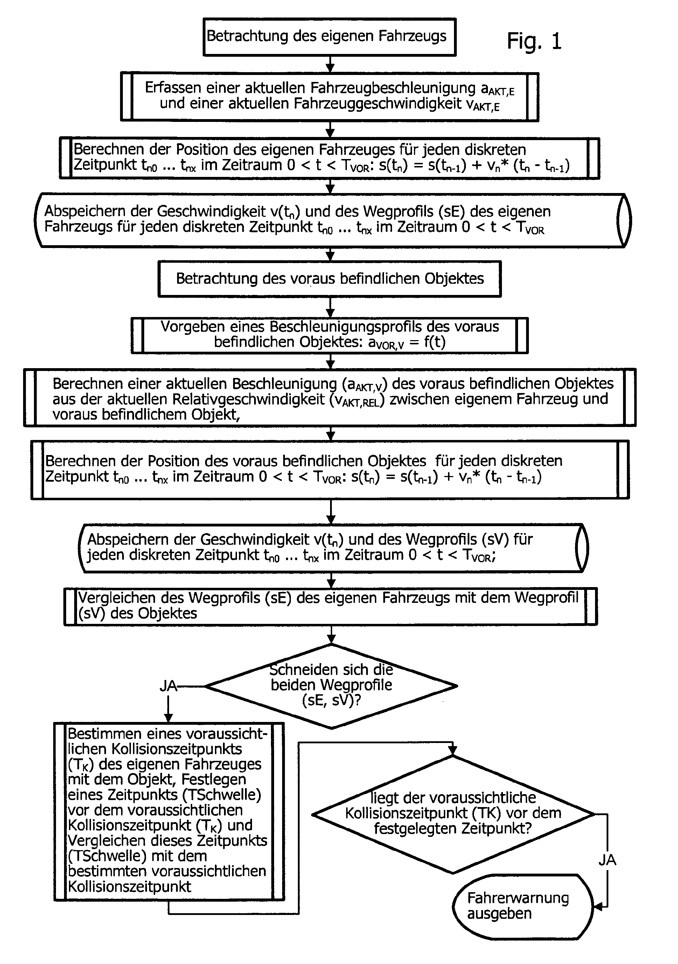

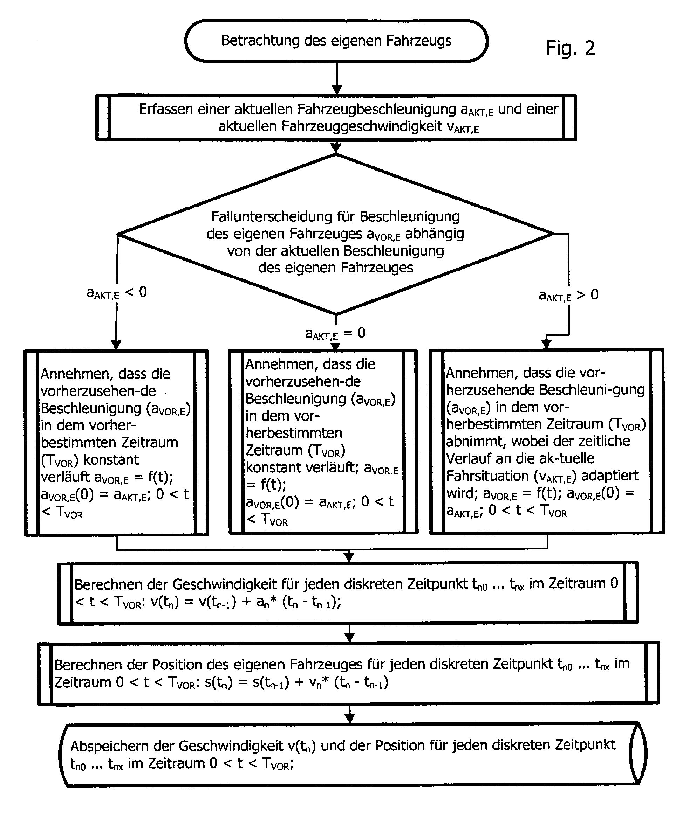

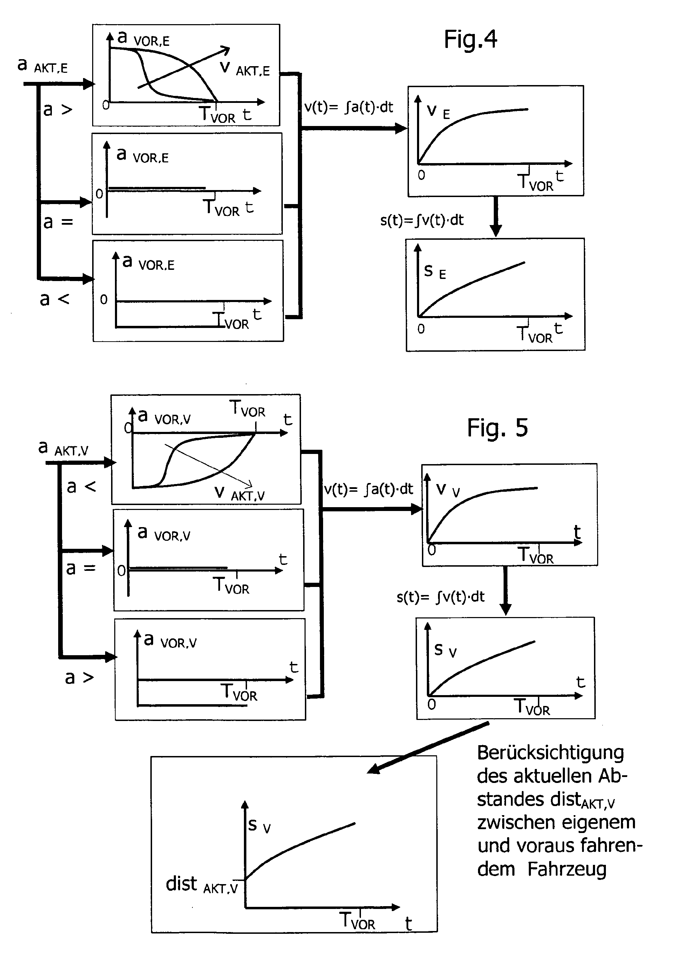

In einer ersten Phase des Verfahrens wird das eigene Fahrzeug betrachtet. (Fig. 1, 2, 4) Dabei wird als erster Schritt zum Beispiel unmittelbar mit einem Längsbeschleunigungssensor oder mittelbar durch Berechnung aus Daten von Raddrehzahlsensoren eine aktuelle Fahrzeugbeschleunigung a_{AKT,E} und eine aktuelle Fahrzeuggeschwindigkeit v_{AKT,E} erfasst oder ermittelt.

Als nächster Schritt dieser ersten Phase wird ein zeitlich veränderliches Beschleunigungsprofil angenommen a_{VOR,E}=f(t), wobei als Startwert (f(0)) die aktuelle Fahrzeugbeschleunigung a_{AKT,E} verwendet wird. Abhängig von der aktuellen Fahrzeuggeschwindigkeit v_{AKT,E} und / oder der Fahrumgebung (zum Beispiel Stadt, Landstraße, Autobahn, etc.) wird das Beschleunigungsprofil modifiziert: Bei hoher Geschwindigkeit (Autobahn) nimmt das vorgegebene Beschleunigungsprofil langsam ab; bei geringer Geschwindigkeit (Stadtverkehr) nimmt das vorgegebene Beschleunigungsprofil schnell ab.

Beim Annehmen des zeitlichen Verlaufs einer vorherzusehenden Fahrzeugbeschleunigung des eigenen Fahrzeuges a_{VOR,E} für einen vorherbestimmten Zeitraum T_{VOR} basierend auf der aktuellen Fahrzeugbeschleunigung des eigenen Fahrzeuges a_{AKT,E} und ggf. aus dem zeitlichen Verlauf der Fahrzeugbeschleunigung des eigenen Fahrzeuges während eines in die Vergangenheit reichenden Zeitraums vorherbestimmter Länge a_{VOR,E} = f(t); 0 < t < T_{VOR} werden drei Fälle unterschieden: Ist die aktuelle Fahrzeugbeschleunigung des eigenen Fahrzeuges a_{AKT,E} positiv, Null oder negativ?

Falls die aktuelle Fahrzeugbeschleunigung des eigenen Fahrzeuges positiv ist a_{AKT,E} > 0, also wenn das eigene Fahrzeug beschleunigt, dann wird für den zeitlichen Verlauf angenommen, dass die vorherzusehende Fahrzeugbeschleunigung des eigenen Fahrzeuges a_{AVOR,E} in dem vorherbestimmten Zeitraum T_{VOR} abnimmt, wobei der zeitliche Verlauf an die aktuelle Fahrsituation, z.B. die aktuelle Fahrzeuggeschwindigkeit des eigenen Fahrzeuges v_{AKT,E} adaptiert wird.

Falls die aktuelle Fahrzeugbeschleunigung des eigenen Fahrzeuges negativ ist a_{AKT,E} < 0, also wenn das eigene Fahrzeug verzögert, dann wird angenommen, dass die vorherzusehende Fahrzeugbeschleunigung des eigenen Fahrzeuges a_{VOR,E} in dem vorherbestimmten Zeitraum T_{VOR} konstant verläuft.

Falls die aktuelle Fahrzeugbeschleunigung des eigenen Fahrzeuges Null ist a_{AKT,E} = 0, also wenn das eigene Fahrzeug mit konstanter Geschwindigkeit fährt, dann wird angenommen, dass die vorherzusehende Fahrzeugbeschleunigung des eigenen Fahrzeuges a_{VOR,E} in dem vorherbestimmten Zeitraum konstant (gleich Null) verläuft.

Die beiden letzeren Fälle, (a_{AKT,E} < 0 und a_{AKT,E} = 0) können auch gemeinsam abgeprüft und es kann für bedie Fälle gemeinsam angenommen werden, dass die vorherzusehende Fahrzeugbeschleunigung des eigenen Fahrzeuges a_{VOR,E} in dem vorherbestimmten Zeitraum konstant verläuft.

In einem weiteren Schritt der ersten Phase wird das Geschwindigkeitsprofil des eigenen Fahrzeuges v_{E}= f(t) vorzugsweise durch schrittweise Integration des angenommenen Beschleunigungsprofils a_{VOR,E} bestimmt, wobei als Startwert f(0) = v_{E}(0) die aktuelle Fahrzeuggeschwindigkeit v_{AKT,E} verwendet wird. Das Berechnen der Geschwindigkeit kann also zum Beispiel für jeden diskreten Zeitpunkt tₙ₀ ... tₙₓ im Zeitraum 0 < t < T_{VOR} nach der Formel erfolgen: v(tₙ) = v(tₙ₋₁) + aₙ* (tₙ - tₙ₋₁). Anschließend folgt in dieser ersten Phase das Bestimmen des Wegprofils des eigenen Fahrzeuges: s_{E} = f(t) durch schrittweise Integration des angenommenen Geschwindigkeitsprofil v_{E}, wobei s_{E}(0) = 0. So kann die Position des eigenen Fahrzeuges für jeden diskreten Zeitpunkt tₙ₀ ... tₙₓ im Zeitraum 0 < t < T_{VOR} berechnet werden mit der Formel s(tₙ) = s(tₙ₋₁) + vₙ* (tₙ - tₙ₋₁).

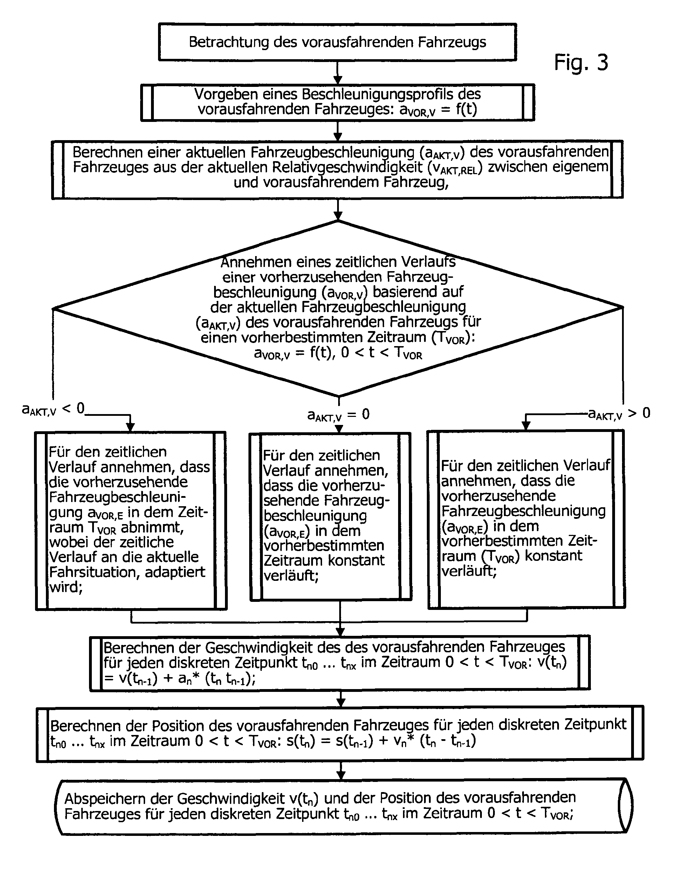

In einer zweiten Phase des Verfahrens wird ein vorausfahrendes Fahrzeug oder ein vor dem eigenen Fahrzeug befindliches Objekt betrachtet (Fig. 1, 3, 5). Hier wird unter "Objekt" oder "voraus befindliches Fahrzeug" stets sowohl ein relativ zu dem eigenen Fahrzeug voraus fahrendes Fahrzeug oder ein vor dem eigenen Fahrzeug befindliches Objekt, das auch stehend sein kann, verstanden.

In einem ersten Schritt der zweiten Phase erfolgt, zum Beispiel mit einem Radarsensor, ein Erfassen eines aktuellen Abstandes dist_{AKT,V} und einer aktuellen relativen Geschwindigkeit vrel_{AKT,V} zwischen dem eigenen Fahrzeug und dem Objekt.

In einem zweiten Schritt der zweiten Phase erfolgt ein Berechnen der absoluten Geschwindigkeit des Objektes aus der aktuellen relativen Geschwindigkeit (vrel_{AKT,V}) des Objektes und der aktuellen Fahrzeuggeschwindigkeit (v_{AKT,E}) des eigenen Fahrzeuges (v_{AKT,E}) sowie Berechnen der absoluten Beschleunigung des Objektes aus dem Geschwindigkeitsverlauf der aktuellen absoluten Geschwindigkeit des Objektes durch schrittweises Differenzieren nach der Zeit.

Anschließend wird ein zeitlich veränderliches Beschleunigungsprofil für das Objekt vorgegeben: a_{VOR,V}= f(t); f(0) = aktuelle Beschleunigung (a_{AKT,V}). Abhängig von der aktuellen Beschwindigkeit v_{AKT,V} und / oder der Fahrumgebung (Stadt, Landstraße, Autobahn, etc.) wird das Beschleunigungsprofil modifiziert (bei hoher Geschwindigkeit (Autobahn) nimmt das vorgegebene Beschleunigungsprofil langsam ab; bei geringer Geschwindigkeit (Stadtverkehr) nimmt das vorgegebene Beschleunigungsprofil schnell ab). Dazu wird ein zeitlicher Verlauf einer vorherzusehenden Beschleunigung des Objektes (a_{VOR,V}) für einen vorherbestimmten Zeitraum (T_{VOR}) basierend auf der aktuellen Beschleunigung des Objektes (a_{AKT,V}) und ggf. aus dem zeitlichen Verlauf der Beschleunigung des Objektes während eines in die Vergangenheit reichenden Zeitraums vorherbestimmter Länge a_{VOR,V} = f(t); 0 < t < T_{VOR} angenommen.

Bei der Annahme des zeitlichen Verlaufs der vorherzusehenden Beschleunigung des Objektes a_{VOR,V} ob die aktuelle Beschleunigung des Objektes a_{AKT,V} werden drei Fälle unterschieden: Ist die aktuelle Beschleunigung des Objektes a_{AKT,E} positiv, Null oder negativ?

Falls die aktuelle aktuelle Beschleunigung des Objektes positiv ist (a_{AKT,V} > 0), also wenn das Objekt beschleunigt, dann wird für den zeitlichen Verlauf angenommen, dass die vorherzusehende Beschleunigung des Objektes (a_{VOR,V}) in dem vorherbestimmten Zeitraum (T_{VOR}) konstant verläuft.

Falls die aktuelle Beschleunigung des Objektes negativ ist (a_{AKT,V} < 0), also wenn das Objekt verzögert, dann wird angenommen, dass die vorherzusehende Beschleunigung des Objektes (a_{VOR,V}) in dem vorherbestimmten Zeitraum (T_{VOR}) abnimmt, wobei der zeitliche Verlauf an die aktuelle Fahrsituation, z.B. die aktuelle Geschwindigkeit des Objektes (v_{AKT,V}) adaptiert wird.

Falls die aktuelle Beschleunigung des Objektes Null ist (a_{AKT,V} = 0), also wenn das Objekt mit konstanter Geschwindigkeit fährt, dann wird angenommen, dass die vorher zusehende Beschleunigung des Objektes (a_{VOR,V}) in dem vorherbestimmten Zeitraum (T_{VOR}) konstant verläuft.

Die beiden letzeren Fälle, (a_{AKT,V} < 0 und a_{AKT,V} = 0) können auch gemeinsam abgeprüft und es kann für bedie Fälle gemeinsam angenommen werden, dass die vorherzusehende Fahrzeugbeschleunigung des Objektes a_{VOR,V} in dem vorherbestimmten Zeitraum konstant verläuft.

In einem weiteren Schritt der zweiten Phase erfolgt ein Bestimmen des Geschwindigkeitsprofils des Objektes v_{V} = f(t) durch schrittweise Integration des angenommenen Beschleunigungsprofils (a_{VOR,V}), wobei als Startwert f(0) = v_{V}(0) =v_{AKT,V} die aktuelle Fahrzeuggeschwindigkeit v_{AKT,V} verwendet wird.

Das Berechnen der Geschwindigkeit für jeden diskreten Zeitpunkt tₙ₀ ... tₙₓ im Zeitraum 0 < t < T_{VOR} kann nach der Formel v(tₙ) = v(tₙ₋₁) + aₙ* (tₙ - tₙ₋₁) erfolgen.

Schließlich folgt ein Bestimmen des Wegprofils des Objektes sᵥ = f(t) durch schrittweise Integration des angenommenen Beschleunigungsprofils (a_{VOR,V}), wobei als Startwert f(0) = s_{V}(0) = dist_{AKT,V} der aktuelle Abstand zwischen dem eigenen Fahrzeug und dem Objekt verwendet wird. Das Berechnen der Position des vorausfahrenden Fahrzeuges für jeden diskreten Zeitpunkt tₙ₀ ... tₙₓ im Zeitraum 0 < t < T_{VOR} kann nach der Formel s(tₙ) = s(tₙ₋₁) + vₙ* (tₙ tₙ₋₁) erfolgen.

In einer dritten Phase des Verfahrens erfolgt eine Untersuchung auf kritische Fahrsituationen (Fig. 1, 6, 7).

Das Annehmen eines zeitlichen Verlaufs einer vorherzusehenden Beschleunigung des vorausbefindlichen Objektes für einen vorherbestimmten Zeitraum kann basierend auf dessen aktueller Beschleunigung und ggf. aus dem zeitlichen Verlauf der Beschleunigung des vorausfahrenden Objektes während eines in die Vergangenheit reichenden Zeitraums vorherbestimmter Länge erfolgen.

Das Annehmen eines zeitlichen Verlaufs eines vorherzusehenden, von Fahrgrößen des eigenen Fahrzeuges abhängigen Beschleunigungsprofils, kann auf Grundlage einer realen Systemantwort des eigenen Fahrzeugs bei einer vorgegebenen Notbremsverzögerung erfolgen. Diese reale Systemantwort könnte als fahrzeugabhängiges Kennlinienfeld abgelegt werden.

Auf Grundlage des Beschleunigungsprofils des vorausfahrenden Fahrzeugs sowie des vorausbefindlichen Objektes werden in einem ersten Schritt die Wegverläufe für das eigene und das vorausbefindliche Objekt ermittelt.

Dazu wird in einem ersten Schritt der dritten Phase das Wegprofil des eigenen Fahrzeugs für jeden diskreten Zeitpunkt (tn0 ... tnx) im Zeitraum (0 < t < TVOR) mit dem Wegprofil des Objektes verglichen. Falls sich die beiden Wegprofile schneiden, bedeutet dies eine potentielle Kollision des eigenen Fahrzeuges mit dem vorausbefindlichen Objekt unter den vorher getroffenen Annahmen. In diesem Fall wird ein voraussichtlicher Kollisionszeitpunkt (TK) des eigenen Fahrzeuges mit dem vorausbefindlichen Objekt aus dem Schnittpunkt der beiden Wegprofile bestimmt. Daraufhin erfolgt ein Vergleichen dieses Zeitpunkts vor der potentiellen Kollision mit dem berechneten voraussichtlichen Kollisionszeitpunkt. Falls der voraussichtliche Kollisionszeitpunkt (T_{K}) vor dem festgelegten Zeitpunkt liegt, werden eine Warnung ausgegeben und/oder andere kollisionsvorbereitende Maßnahmen getroffen.

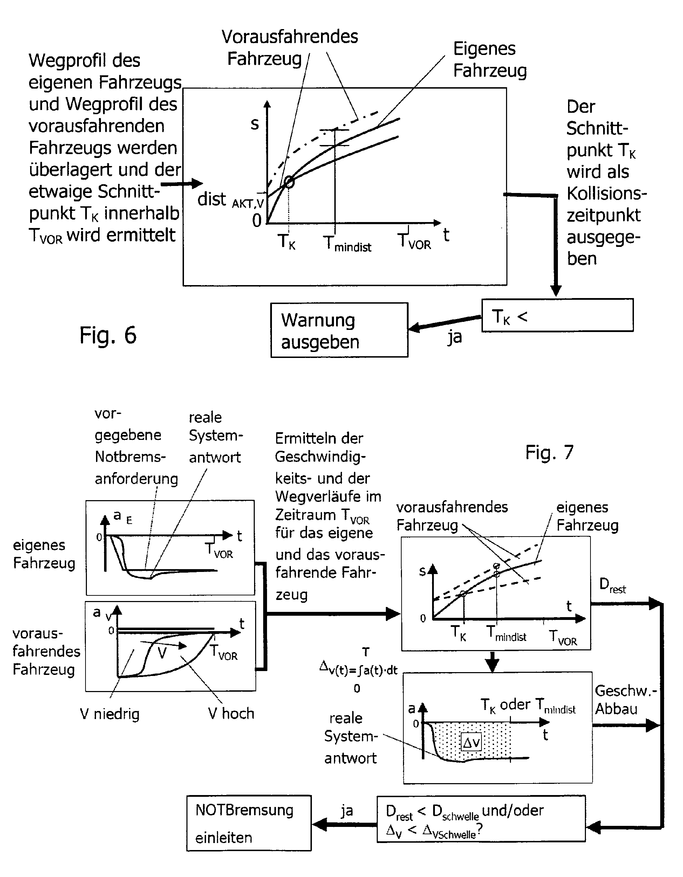

Das Untersuchen der beiden Wegprofile im Verhältnis zu einander kann das Suchen eines Zeitpunktes T zum Ziel haben, an dem beide Wegprofile einen gemeinsamen Schnittpunkt aufweisen. Ein Schnittpunkt der beiden Wegprofile bedeutet eine potentielle Kollision des eigenen mit dem vorausbefindlichen Objekt zum Zeitpunkt T_{K} unter den vorher getroffenen Annahmen (in dem rechten oberen Diagramm der Fig. 7 ist dies der Schnittpunkt zwischen der unteren durchgezogenen Linie (eigenes Fahrzeug) mit der gestrichelten Linie (vorausfahrendes Fahrzeug) zum Zeitpunkt T_{K}). Das Untersuchen der beiden Wegprofile kann ebenfalls das Ermitteln eines minimalen Restabstandes Dᵣₑₛₜ zwischen dem eigenen Fahrzeug und dem vorausbefindlichen Objekt zum Zeitpunkt T_{mindist} unter den vorher getroffenen Annahmen zum Ziel haben (in dem rechten oberen Diagramm der Fig. 7 ist dies der Schnittpunkt zwischen der durchgezogenen Linie (eigenes Fahrzeug) mit der oberen gestrichelten Linie (vorausfahrendes Fahrzeug) zum Zeitpunkt T_{mindist}).

Das Untersuchen der beiden Wegprofile im Verhältnis zu einander kann das Suchen eines Zeitpunktes umfassen, an dem entweder beide Wegprofile einen gemeinsamen Schnittpunkt aufweisen oder das eigene und das vorausfahrende Fahrzeug einen minimalen Abstand Dᵣₑₛₜ übereinstimmen. Ein Schnittpunkt der beiden Wegprofile bedeutet eine potentielle Kollision des eigenen mit dem vorausbefindlichen Objekt unter den vorher getroffenen Annahmen. Für den Fall, dass ein solcher Schnittpunkt existiert, werden ermittelt: (i) der Zeitpunkt Tₖ des Schnittpunktes (also der potentiellen Kollision), (ii) der Restweg bis zur Kollision und/oder die Restgeschwindigkeit zum Zeitpunkt der potentiellen Kollision, und (iii) der Geschwindigkeitsabbau Δ_{V} bis zu dem Zeitpunkt der potentiellen Kollision. Im anderen Fall (d.h. die Wegprofile schneiden sich nicht, aber das eigene und das vorausfahrende Fahrzeug haben zueinander einen minimalen Abstand Dᵣₑₛₜ) werden ermittelt: (i) der Restabstand Dᵣₑₛₜ zwischen eigenem Fahrzeug und vorausfahrendem Fahrzeug zu diesem Zeitpunkt T_{mindist} und/oder (ii) der Geschwindigkeitsabbau Δ_{V} des eigenen Fahrzeuges bis zu dem Zeitpunkt T_{mindist}.

In einem zweiten Schritt kann das Ermitteln eines Geschwindigkeitsabbaus auf Grundlage der zuvor ermittelten Zeitpunkte erfolgen. Ein Annehmen des Geschwindigkeitsabbaus Δ_{V} des eigenen Fahrzeuges kann auf Grundlage der realen Systemantwort des eigenen Fahrzeugs durch zeitliche Integration gemäß ΔV = ∫a(t)•dt erfolgen. Hierbei ist a(t) der Verlauf der realen Systemantwort des eigenen Fahrzeugs bei einer Notbremsanforderung (siehe Fig. 7 linkes oberes Diagramm). Der Bremsvorgang beginnt zum Zeitpunkt t = 0. Bei einer Kollision des eigenen Fahrzeuges mit dem vorausfahrenden Fahrzeug zum Zeitpunkt t = T_{K} kann der Geschwindigkeitsabbau des eigenen Fahrzeuges bis zur Kollision aus der Integration zwischen den Integrationsgrenzen t = 0 und t = T_{K} ermittelt werden.

Ein Geschwindigkeitsabbau ΔV bis zum Erreichen des Restabstandes D_{Rest} zum Zeitpunkt T_{mindist} kann aus der Integration von ΔV = ∫a(t)•dt zwischen den Integrationsgrenzen t = 0 und t = T_{mindist} ermittelt werden.

Eine erste Bedingung für ein Einleiten eines fahrerunabhängigen Notbremsvorgangs kann das Unterschreiten eines vorgebbaren Mindestabstandes D_{Schwelle} zwischen dem eigenen und dem vorausbefindlichen Objekt sein. D.h. ein Notbremsvorgang könnte bei der Bedingung D_{Rest} < D_{Schwelle} eingeleitet werden.

Eine zweite Bedingung für ein Einleiten eines Notbremsvorgangs kann das Unterschreiten eines vorgebbaren Geschwindigkeitsabbaus ΔV_{Schwelle} des eigenen Fahrzeuges bis zum Kollisionszeitpunkt t = T_{K}, bei dem das eigene Fahrzeug mit dem vorausbefindlichen Objekt kollidiert. D. h., ein fahrerunabhängiger Notbremsvorgang könnte bei Erfülltsein der Bedingung ΔV < ΔV_{Schwelle} eingeleitet werden.

Ein fahrerunabhängiger Notbremsvorgang kann bei einem Erfüllen der ersten Bedingung oder bei einem Erfüllen der zweiten Bedingung eingeleitet werden. Ein solcher fahrerunabhängiger Notbremsvorgang kann auch eingeleitet werden, wenn die erste und die zweite Bedingung erfüllt sind. Mit anderen Worten, wenn der Geschwindigkeitsabbau Δ_{V} des eigenen Fahrzeuges einen vorgebbaren Schwellenwert unterschreitet und / oder der Restabstand Dᵣₑₛₜ zwischen eigenem Fahrzeug und vorausbefindlichem Objekt zu diesem Zeitpunkt T_{mindist} ebenfalls einen vorgebbaren Schwellenwert unterschreitet oder Null ist, wird ein fahrerunabhängiger Notbremsvorgang eingeleitet.

Der Zeitpunkt für eine Warnung oder andere kollisionsvorbereitende Maßnahmen kann abhängig von Fahreraktivitäten wie zum Beispiel Blinker betätigen, Lenkradaktivität, Betätigung Gaspedal, Bremspedal, Gangwahlhelbelbetätigung, etc., Telefonaktivität, aktueller Fahrsituation, dem aktuellen Fahrszenario und aktuellen Umweltbedingungen wie zum Beispiel Wetterbedingungen detektiert durch Scheibenwischeraktivität, Nebelschlussleuchte, Regensensor ... früher oder später festgelegt werden. Zusätzlich oder alternativ zur Warnungsausgabe an den Fahrer des eigenen Fahrzeuges kann (bereits zu Beginn oder erst während der Warnzeitdauer) eine zum Beispiel optische Warnung an den / die nachfolgenden Verkehrsteilnehmer ausgegeben werden. Dazu kann die Warnblinkanlage aktiviert werden und / oder die Bremsleuchten (auch intermittierend) angesteuert werden.

Eine kritische Situation und ein geeigneter Zeitpunkt zur Aktivierung einer kollisionsvermeidenden oder zumindest Kollisionsfolgen mindernden Bremsung können so früher erkannt werden.

Insbesondere kann eine kritische Situation erkannt und der geeignete Zeitpunkt ermittelt werden, an dem ein Bremseingriff des Fahrzeugbremssystems dazu führt, zum Zeitpunkt der Kollision einen vorgegebenen Geschwindigkeitsabbau erreicht zu haben. Alternativ dazu kann der geeignete Zeitpunkt für einen Bremseingriff des Fahrzeugbremssystems ermittelt werden um zum Zeitpunkt gleicher Geschwindigkeit von vorausbefindlichen Objekt und eigenem Fahrzeug einen vorgegebenem Restabstand zu haben. Fehlerhafte oder unnötige Bremseingriffe sollen dabei nur selten auftreten.

Auch der Schwellenwert für den Geschwindigkeitsabbau und den Restabstand kann abhängig von den oben genannten Kriterien (Fahreraktivität, aktueller Fahrsituation, dem aktuellen Fahrszenario und aktuellen Umweltbedingungen) festgelegt werden.

Die selbsttätige (Not-)Bremsung wird beendet oder abgebrochen, wenn die aktuelle Relativgeschwindigkeit zwischen eigenem Fahrzeug und dem vorausbefindlichen Objekt Null ist, wenn ein Mindestabstand zwischen ihnen vorhanden ist, und/oder der vorgegebene Geschwindigkeitsabbau bis zu dem Zeitpunkt überschritten wurde (oder die Kollision eingetreten ist). Hierbei wird insbesondere bei der Betrachtung des vorgegebenen Geschwindigkeitsabbaus auch berücksichtigt, dass nach einem Beenden des Bremseingriffs die zu diesem Zeitpunkt vorhandene Verzögerung nicht unmittelbar wegfällt, wenn der Bremseingriff beendet wird. Mit anderen Worten, das reale Fahrzeugverhalten nach dem Ende des Bremseingriffs kann mit einberechnet werden.

Die Bremsausrüstung des eigenen Fahrzeugs kann vor dem selbsttätigen Notbremsvorgang bereits in Bremsstellung gebracht werden (Vorbefüllen der Bremsen, leichtes Anlegen der Bremsbeläge an die Bremsscheiben, etc.) Dabei kann das eigene Fahrzeug auch bereits leicht abgebremst werden. Dies kann in einer für den Fahrer wahrnehmbarer Form geschehen, und so auch schon zumindest ein Teil der Fahrerwarnung sein. Diese Vorbereitungsbremsung ist kleiner als die eigentliche Notbremsung.

Wenn der Fahrer des eigenen Fahrzeugs optisch und/oder akustisch und/oder haptisch wahrnehmbarer Weise (z.B. Vibration des Lenkrades) gewarnt wird, wird dieser unmissverständlich darauf aufmerksam gemacht, dass die Gefahr besteht auf das voraus befindliche Objekt aufzufahren und daher bei Ablauf der vorgegebenen Warnzeitdauer der selbsttätige Notbremsvorgang ausgelöst wird.

Der selbsttätige Notbremsvorgang kann dann ausgelöst werden, wenn eine vorgegebene Notbremsbedingung erfüllt wird und die vorgegebene Warnzeitdauer abgelaufen ist. Die Notbremsverzögerung oder eine damit zusammenhängende Größe, wie der Notbremsdruck, die Notbremskraft oder das Notbremsmoment, kann entweder fest oder aber einstellbar vorgegeben werden. In letzterem Fall besteht die Möglichkeit, in Abhängigkeit von Größen, die beispielsweise die Fahrzeugmasse, den Belagreibwert der Radbremseinrichtungen des Fahrzeugs, die Fahrbahnbeschaffenheit oder die Sichtverhältnisse beschreiben, beispielsweise eine tatsächlich erreichbare Maximalbremsverzögerung zu ermitteln und den Wert der vorgegebenen Notbremsverzögerung entsprechend der ermittelten tatsächlich erreichbaren Maximalbremsverzögerung einzustellen.

Statt dessen kann der Wert der Notbremsverzögerung auch fest vorgegeben werden. Dabei wird in diesem Fall vorzugsweise von einer durchschnittlich erreichbaren Maximalbremsverzögerung ausgegangen, deren Wert typischerweise im Bereich zwischen 3 m/s² und 8 m/s² liegt.

Entsprechendes gilt für die Vorgabe der Warnzeitdauer, die ebenfalls fest oder einstellbar erfolgen kann. Eine fest vorgegebene Warnzeitdauer hat den Vorteil, dass dem Fahrer der Zeitpunkt der Auslösung des selbsttätigen Notbremsvorgangs bekannt ist und dieser nicht unerwartet bzw. unvorhersehbar eintrifft. Ein geeigneter Wert der vorgegebenen Warnzeitdauer kann aufgrund von Fahrversuchen ermittelt werden. Dieser liegt typischerweise im Bereich zwischen 1,5 und 2,5 Sekunden. Andererseits ist es denkbar, den Wert der vorgegebenen Warnzeitdauer in Abhängigkeit von Größen, die z.B. die Fahrzeugmasse, den Belagreibwert der Radbremseinrichtungen des eigenen Fahrzeugs, die Fahrbahnbeschaffenheit oder die Sichtverhältnisse beschreiben, einzustellen. Hierbei wird vorzugsweise ein Mindestwert der Warnzeitdauer vorgegeben, der nicht unterschritten werden soll, damit dem Fahrer grundsätzlich ausreichend Zeit bleibt, sich auf die Auslösung des selbsttätigen Notbremsvorgangs vorzubereiten oder vorher noch selbst einzugreifen.

Auch die Relativgeschwindigkeit des vorausbefindlichen Objektes zum eigenen Fahrzeug kann entweder fest oder aber einstellbar vorgegeben werden. Hierbei ist es von Vorteil, wenn der Wert einer fest vorgegebenen Zielrelativgeschwindigkeit in etwa Null beträgt. In diesem Fall wird die Eigengeschwindigkeit des Fahrzeugs durch den selbsttätigen Notbremsvorgang nur soweit wie unbedingt nötig verringert, um ein Auffahren des eigenen Fahrzeugs auf das voraus befindliche Objekt zuverlässig zu verhindern. Jede darüber hinausgehende Verringerung der Eigengeschwindigkeit ist unnötig und stellt insbesondere für nachfolgende Fahrzeuge eine zusätzliche Gefahr dar.

Ferner kann auch der Sicherheitsabstand zum voraus befindlichen Objekt fest oder einstellbar vorgegeben werden. Eine Einstellung des Werts des Sicherheitsabstands kann entweder in Abhängigkeit von Größen, die beispielsweise die Fahrzeugmasse, den Bremsbelagreibwert der Radbremseinrichtungen des eigenen Fahrzeugs, die Fahrbahnbeschaffenheit, die Fahrzeuggeschwindigkeit oder die Sichtverhältnisse beschreiben, oder aber manuell durch den Fahrer des eigenen Fahrzeugs erfolgen. Hierbei ist vorzugsweise ein Mindestwert für den Sicherheitsabstand vorgegeben, sodass ein allzu dichtes Auffahren auf das voraus befindliche Objekt mit Beendigung des selbsttätigen Notbremsvorgangs verhindert wird. Der Einfachheit halber kann die Vorgabe des Werts des Sicherheitsabstands auch fest vorgegeben werden. Typischerweise liegt dieser dann zwischen Null und einigen Metern.

Vorteilhafterweise unterbleibt bei Vorliegen von Fahreraktivität und/oder bei Verringerung der Auffahrgefahr die Auslösung einer Fahrerwarnung und/oder die Intensität der Fahrerwarnung wird angepasst. Auf diese Weise wird vermieden, dass der Fahrer des Fahrzeugs unnötig ausgelöste Fahrerwarnungen als störend empfindet und die Vorrichtung auf Dauer abschaltet, so dass das Verfahren nicht durchgeführt wird.

Weiterhin kann bei Vorliegen von Fahreraktivität und/oder bei Verringerung der Auffahrgefahr eine bereits ausgelöste Fahrerwarnung beendet und/oder verändert werden und / oder die Auslösung des selbsttätigen Notbremsvorgangs unterbleiben.

Zum einen wird dem Fahrer des eigenen Fahrzeugs solange wie möglich die Gelegenheit gegeben, geeignete Gegenmaßnahmen zur Vermeidung des Auffahrens auf das vorausfahrende Fahrzeug zu treffen, und zum anderen wird eine zwischenzeitlich unnötig gewordene Fahrerwarnung nicht weiter aufrechterhalten und/oder ein zwischenzeitlich unnötig gewordener selbsttätiger Notbremsvorgang gar nicht erst ausgelöst.

Der selbsttätige Notbremsvorgang kann bei Ablauf der vorgegebenen Warnzeitdauer automatisch ausgelöst werden, sofern die Fahrerwarnung nicht während der vorgegebenen Warnzeitdauer abgebrochen wird. So ist dem Fahrer des eigenen Fahrzeugs der Zeitpunkt der Auslösung des selbsttätigen Notbremsvorgangs bekannt, und er hat Gelegenheit, geeignete Gegenmaßnahmen zur Vermeidung des Auffahrens auf das voraus befindliche Objekt zu treffen.

Um den Erfolg eines bereits ausgelösten selbsttätigen Notbremsvorgangs nicht durch einen vorzeitigen Abbruch von Seiten des Fahrers zu gefährden, wird dieser erst dann abgebrochen, wenn eine ermittelte Notbremszeitdauer abgelaufen ist und/oder wenn die vorgegebene Zielrelativgeschwindigkeit und der vorgegebene Sicherheitsabstand erreicht sind. Die Notbremszeitdauer hängt ab von der momentanen Fahrsituation beim Auslösen des selbsttätigen Notbremsvorgangs, der vorgegebenen Notbremsverzögerung, der Relativgeschwindigkeit und dem Sicherheitsabstand zwischen eigenem Fahrzeug und dem vorausbefindlichen Objekt.

Vorteilhafterweise besteht die Fahrerwarnung aus wenigstens zwei Warnstufen, die innerhalb der vorgegebenen Warnzeitdauer der Fahrerwarnung zeitlich nacheinander ausgelöst werden, wobei jeder Warnstufe eine vorgegebene Warnstufenzeitdauer zugeordnet ist. Somit ist es möglich, die Fahrerwarnung durch Verwendung unterschiedlich dringlicher Warnstufen aufzubauen, wobei die Dringlichkeit der Warnstufen mit Abnahme der bis zur Auslösung des selbsttätigen Notbremsvorgangs verbleibenden Zeit zunehmen kann, sodass der Fahrer auf die kürzer werdende Zeitspanne bis zur Auslösung des selbsttätigen Notbremsvorgangs hingewiesen wird.

Die Warnstufenzeitdauer einer Warnstufe kann fest oder aber einstellbar vorgegeben sein. Eine fest vorgegebene Warnstufenzeitdauer hat den Vorteil, dass dem Fahrer der Zeitpunkt der Auslösung einer gegebenenfalls nachfolgenden Warnstufe und/oder des selbsttätigen Notbremsvorgangs bekannt ist und dieser nicht unerwartet bzw. unvorhersehbar eintrifft.

Daneben besteht die Möglichkeit, den Wert der Warnstufenzeitdauer einer Warnstufe in Abhängigkeit von Größen einzustellen, die beispielsweise die Fahrzeugmasse, den Bremsbelagreibwert der Radbremseinrichtungen des eigenen Fahrzeugs, die Sichtverhältnisse oder die Fahrbahnbeschaffenheit beschreiben. So kann beispielsweise die letzte und damit in der Regel dringlichste Warnstufe umso früher ausgelöst werden, je ungünstiger die Verhältnisse zur Vermeidung des Auffahrens durch Auslösung des selbsttätigen Notbremsvorgangs sind.

Weiterhin besteht die Möglichkeit, nach Auslösung einer ersten Warnstufe nur dann wenigstens eine weitere Warnstufe auszulösen, wenn eine der weiteren Warnstufe jeweils zugeordnete, vorgegebene Warnbedingung erfüllt ist. So lässt sich die Notwendigkeit der Auslösung jeder weiteren Warnstufe überprüfen und die Auslösung unnötiger, der tatsächlichen Auffahrgefahr unangemessener Warnstufen vermeiden.

Bei Vorliegen von Fahreraktivität und/oder bei Verringerung der Auffahrgefahr kann wenigstens eine der bereits ausgelösten Warnstufen beendet werden und/oder die Auslösung weiterer Warnstufen unterbleiben. So wird vermieden, dass der Fahrer des Fahrzeugs unnötig ausgelöste Warnstufen als störend empfindet und die Vorrichtung deaktiviert.

Hierbei ist es auch möglich, eine bereits ausgelöste Warnstufe, die z.B. in Form einer optischen Fahrerwarnung vorliegt, bis zum Ablauf der vorgegebenen Warnzeitdauer aufrechtzuerhalten und lediglich weitere Warnstufen nicht auszulösen, um den Fahrer auf die potentiell bestehende Auffahrgefahr hinzuweisen.

Zweckmäßigerweise wird das Vorliegen von Fahreraktivität aufgrund einer Betätigung wenigstens eines der Bedienelemente des Fahrzeugs erkannt, wobei das Bedienelement insbesondere zur Änderung der Längs- oder Querdynamik des Fahrzeugs dient.

Zu den Bedienelementen, die zur Erkennung der Fahreraktivität geeignet sind, zählen beispielsweise das Fahrpedal, das Bremspedal, das Kupplungspedal, das Lenkrad oder die Richtungsgeber des Fahrzeugs.

Eine Verringerung der Auffahrgefahr kann in einfacher Weise anhand eines mit der Zeit zunehmenden Abstands zwischen Fahrzeug und vorausfahrendem Fahrzeug und/oder einer mit der Zeit abnehmenden Relativgeschwindigkeit zwischen eigenem Fahrzeug und voraus befindlichem Objekt erkannt werden.

Um die Gefahr eines Auffahrens des Fahrzeugs auf das vorausfahrende Fahrzeug auch in komplexen Verkehrsituationen zuverlässig erkennen bzw. korrekt einschätzen zu können, wird die momentane Fahrsituation des Fahrzeugs in Abhängigkeit des ermittelten Abstands zwischen eigenem Fahrzeug und voraus befindlichem Objekt und/oder der ermittelten Geschwindigkeit des Fahrzeugs und/oder der ermittelten Relativbeschleunigung zwischen eigenem Fahrzeug und voraus befindlichem Objekt und/oder der ermittelten Beschleunigung des Fahrzeugs und/oder der Fahrbahnneigung und/oder von Reibwerten zwischen der Fahrbahn und den Fahrzeugrädern bestimmt.

Damit die Gefahr möglicher Folgeunfälle verringert wird, kann bei Auslösung des selbsttätigen Notbremsvorgangs eine Warnung vorausfahrender und/oder hinterherfahrender Fahrzeuge erfolgen. Hierzu werden beispielsweise die Bremslichter, die Fahrzeughupe, die Warnblinker oder das Fahr- oder Fernlicht des Fahrzeugs betätigt.

## Patentansprüche

1. Verfahren zur Vermeidung von Kollisionen mit einem vor einem eigenen Fahrzeug befindlichen Objekt, mit folgenden Schritten:
- Vorgeben eines von Fahrgrößen des eigenen Fahrzeuges abhängigen Beschleunigungsprofils (a_{VOR,E});
- Annehmen eines zeitlichen Verlaufs einer vorherzusehenden Beschleunigung des eigenen Fahrzeuges (a_{VOR,E}) basierend auf dessen aktueller Beschleunigung (a_{AKT,E});
- Bestimmen eines Wegprofils (s_{E}) des eigenen Fahrzeuges aus dem zeitlichen Verlaufs der vorherzusehenden Beschleunigung (a_{VOR,E});
- Erfassen eines aktuellen Abstandes (dist_{AKT,V}) und einer aktuellen relativen Geschwindigkeit (vrel_{AKT,V}) eines vor dem eigenen Fahrzeug befindlichen Objektes;
- Annehmen eines zeitlichen Verlaufs einer vorherzusehenden Beschleunigung des vorausbefindlichen Objekts (a_{VOR,V}) basierend auf dessen aktueller Beschleunigung (a_{AKT,V});
- Bestimmen eines Wegprofils des Objektes (s_{V}) aus dem zeitlichen Verlaufs der vorherzusehenden Beschleunigung (a_{VOR,V});
- Vergleichen des Wegprofils (s_{E}) des eigenen Fahrzeugs mit dem Wegprofil (s_{V}) des vorausbefindlichen Objektes; und
- falls sich die beiden Wegprofile (s_{E}, s_{V}) schneiden oder die Geschwindigkeit des eigenen Fahrzeugs mit der des Objektes zumindest innerhalb eines Toleranzbandes übereinstimmt, Bestimmen eines voraussichtlichen Kollisionszeitpunkts (T_{K}) des eigenen Fahrzeuges mit dem Objekt,
- Vergleichen eines Zeitpunkts (T_{Schwelle}) mit dem bestimmten voraussichtlichen Kollisionszeitpunkt; und falls die Geschwindigkeit des eigenen Fahrzeugs mit der des vorausbefindlichen Objektes zumindest innerhalb eines Toleranzbandes übereinstimmt, wird ein Restabstand (Dᵣₑₛₜ) des eigenen Fahrzeugs von dem Objekt und der Geschwindigkeitsabbau (Vᵣₑₛₜ) bis zu dem Zeitpunkt ermittelt, und
- falls der Geschwindigkeitsabbau einen Wert unterschreitet und der Restabstand ebenfalls einen Wert unterschreitet, wird eine fahrerunabhängige (Not-)Bremsung eingeleitet.

2. Verfahren nach dem vorhergehenden Anspruch, bei dem das Vorgeben eines von Fahrgrößen des eigenen Fahrzeuges abhängigen Beschleunigungsprofils (a_{VOR,E}) eine erfasste oder berechnete aktuelle Fahrzeugbeschleunigung (a_{AKT,E}) und / oder eine erfasste oder berechnete aktuelle Fahrzeuggeschwindigkeit (v_{AKT,E}) eines eigenen Fahrzeuges berücksichtigt.

3. Verfahren nach einem der vorhergehenden Ansprüche, bei dem, falls der voraussichtliche Kollisionszeitpunkt (T_{K}) vor dem festgelegten Zeitpunkt liegt, die Restgeschwindigkeit des eigenen Fahrzeugs relativ zum vorausbefindlichen Objekt zu dem voraussichtlichen Kollisionszeitpunkt (T_{K}) und der mögliche Geschwindigkeitsabbau bis zu dem voraussichtlichen Kollisionszeitpunkt (T_{K}) ermittelt werden.

4. Verfahren nach einem der vorhergehenden Ansprüche, bei dem das Annehmen eines zeitlichen Verlaufs einer vorherzusehenden Beschleunigung des vorausbefindlichen Objekts ein Berechnen oder Bestimmen der aktuellen absoluten Geschwindigkeit des vorausbefindlichen Objektes und / oder der absoluten aktuellen Beschleunigung des Objektes umfasst.

5. Verfahren nach einem der vorhergehenden Ansprüche, bei dem das Vergleichen des Zeitpunkts (T_{Schwelle}) mit dem bestimmten voraussichtlichen Kollisionszeitpunkt (T_{K}) des eigenen Fahrzeuges mit dem vorausbefindlichen Objekt ein Festlegen eines Zeitpunkts (T_{Schwelle}) vor dem voraussichtlichen Kollisionszeitpunkt (T_{K}) umfasst.

6. Verfahren nach einem der vorhergehenden Ansprüche, bei dem das Annehmen eines zeitlichen Verlaufs einer vorherzusehenden Beschleunigung des Objektes für einen vorherbestimmten Zeitraum basierend auf dessen aktueller Beschleunigung und / oder aus dem zeitlichen Verlauf der Fahrzeugbeschleunigung des vorausbefindlichen Objektes während eines in die Vergangenheit reichenden Zeitraums vorherbestimmter Länge erfolgen.

7. Verfahren nach einem der vorhergehenden Ansprüche, bei dem das Annehmen eines zeitlichen Verlaufs eines vorherzusehenden, von Fahrgrößen des eigenen Fahrzeuges abhängigen Beschleunigungsprofils, auf Grundlage einer realen Systemantwort des eigenen Fahrzeugs bei einer vorgegebenen Notbremsverzögerung erfolgen.

8. Verfahren nach einem der vorhergehenden Ansprüche, bei dem aus dem zeitlichen Verlauf der Beschleunigung des vorausfahrenden Objektes sowie des eigenen Fahrzeugs die Wegverläufe für das eigene und das vorausbefindliche Objekt ermittelt werden.

9. Verfahren nach einem der vorhergehenden Ansprüche, bei dem das Untersuchen der beiden Wegprofile im Verhältnis zu einander das Suchen eines Zeitpunktes umfassen kann, an dem entweder beide Wegprofile einen gemeinsamen Schnittpunkt aufweisen oder das eigene Fahrzeug und das vorausbefindliche Objekt einen minimalen Abstand (Dᵣₑₛₜ) zueinander aufweisen.

10. Verfahren nach dem vorhergehenden Anspruch, bei dem bei Vorliegen eines Schnittpunktes der beiden Wegprofile (i) der Zeitpunkt (Tₖ) des Schnittpunktes, (ii) der Restweg bis zur Kollision und/oder die Restgeschwindigkeit zum Zeitpunkt der potentiellen Kollision, und (iii) der Geschwindigkeitsabbau (Δ_{V}) bis zu dem Zeitpunkt der potentiellen Kollision ermittelt werden, und
sofern sich die Wegprofile nicht schneiden, aber das eigene und das vorausfahrende Fahrzeug zueinander einen minimalen Abstand (Dᵣₑₛₜ) haben, werden (i) der Restabstand (Dᵣₑₛₜ) zwischen eigenem Fahrzeug und vorausbefindlichen Objekt zu diesem Zeitpunkt (T_{mindist}) und/oder (ii) der Geschwindigkeitsabbau (Δ_{V}) des eigenen Fahrzeuges bis zu dem Zeitpunkt (T_{mindist}) ermittelt.

11. Verfahren nach einem der vorhergehenden Ansprüche, bei dem das Ermitteln eines Geschwindigkeitsabbaus (Δ_{V}) auf Grundlage der zuvor ermittelten Zeitpunkte erfolgt, und wobei vorzugsweise der Geschwindigkeitsabbau (Δ_{V}) des eigenen Fahrzeuges eine reale Systemantwort des eigenen Fahrzeugs bei einer Notbremsanforderung berücksichtigt und der Geschwindigkeitsabbau (ΔV) bis zum Erreichen des Restabstandes (D_{Rest}) zueinander zu demm Zeitpunkt (T_{mindist}) durch Integration der Beschleunigung des eigenen Fahrzeuges zwischen den Integrationsgrenzen t = 0 und t = T_{mindist} ermittelt werden.

12. Verfahren nach einem der vorhergehenden Ansprüche, bei dem eine erste Bedingung für ein Einleiten eines fahrerunabhängigen Notbremsvorgangs ein Unterschreiten eines vorgebbaren Mindestabstandes (D_{Schwelle}) zwischen dem eigenen und dem vorausbefindlichen Objekt ist, und / oder
bei dem eine zweite Bedingung für ein Einleiten eines Notbremsvorgangs das Unterschreiten eines vorgebbaren Geschwindigkeitsabbaus (ΔV_{Schwelle}) des eigenen Fahrzeuges bis zum Kollisionszeitpunkt t = T_{K}, bei dem das eigene Fahrzeug mit dem vorausbefindlichen Objekt kollidiert.

13. Verfahren nach einem der vorhergehenden Ansprüche, bei dem ein Zeitpunkt für eine Warnung oder andere kollisionsvorbereitende Maßnahmen abhängig von Fahreraktivitäten, dem aktuellen Fahrszenario und aktuellen Umweltbedingungen früher oder später festgelegt wird.

14. Verfahren nach einem der vorhergehenden Ansprüche, bei dem zusätzlich oder alternativ zur Warnungsausgabe an den Fahrer des eigenen Fahrzeuges eine optische und / oder akustische Warnung an nachfolgende Verkehrsteilnehmer ausgegeben wird.

## Claims

1. A method for preventing collisions with an object located in front of an own vehicle, with the following steps:
- specifying an acceleration profile (a_{VOR,E}) depending on driving variables of the own vehicle;
- assuming a time progression of a foreseeable acceleration of the own vehicle (a_{VOR,E}) based on the current acceleration (a_{AKT,E}) of the own vehicle;
- determining a path profile (s_{E}) of the own vehicle from the time progression of the foreseeable acceleration (a_{VOR,E});
- detecting a current distance (dist_{AKT,V}) and a current relative velocity (vrel_{AKT,V}) of an object in front of the own vehicle;
- assuming a time progression of a foreseeable acceleration of the object in front (a_{VOR,V}) based on a current acceleration (a_{AKT,V}) of the object in front;
- determining a path profile of the object (s_{V}) from the time progression of the foreseeable acceleration (a_{VOR,V});
- comparing the path profile (s_{E}) of the own vehicle with the path profile (s_{V}) of the object in front; and
- if the two path profiles (s_{E}, s_{V}) intersect or the velocity of the own vehicle coincides with that of the object at least within a tolerance band, determining the probable collision time (T_{K}) of the own vehicle with the object;
- comparing a time (T_{Schwelle}) with the determined probable collision time; and if the velocity of the own vehicle coincides with that of the object in front at least within a tolerance band, determining a residual distance (Dᵣₑₛₜ) of the own vehicle from the object and a reduction in velocity (Vᵣₑₛₜ) up to the time, and
- if the velocity reduction falls below a value and the residual distance likewise falls below a value, initiating a driver-independent (emergency) braking.

2. The method according to the preceding claim, in which the specifying an acceleration profile (a_{VOR,E}) dependent on driving variables of the own vehicle takes account of an acquired or calculated current vehicle acceleration (a_{AKT,E}) and/or an acquired or calculated current vehicle velocity (v_{AKT,E}) of an own vehicle.

3. The method according to any one of the preceding claims, in which, if the probable collision time (T_{K}) lies before the determined time, the residual velocity of the own vehicle relative to the object in front at the probable collision time (T_{K}) and the possible velocity reduction up to the probable collision time (T_{K}) are determined.

4. The method according to any one of the preceding claims, in which the assuming a time progression of a foreseeable acceleration of the object in front comprises calculating or determining the current absolute velocity of the object in front and/or the absolute current acceleration of the object.

5. The method according to any one of the preceding claims, in which the comparing the time (T_{Schwelle}) with the determined probable collision time (T_{K}) of the own vehicle with the object in front comprises establishing a time (T_{Schwelle}) before the probable collision time (T_{K}).

6. The method according to any one of the preceding claims, in which the assuming a time progression of a foreseeable acceleration of the object for a predetermined period takes place based on the current acceleration of the object in front and/or from the time progression of the vehicle acceleration of the object in front during a period of predetermined length extending into the past.

7. The method according to any one of the preceding claims, in which the assuming a time progression of a foreseeable acceleration profile depending on the driving variable of the own vehicle takes place on the basis of a real system response of the own vehicle in case of a predetermined emergency braking deceleration.

8. The method according to any one of the preceding claims, in which the path progressions for the own vehicle and the object in front are determined from the time progression of the acceleration of the object in front as well as of the own vehicle.

9. The method according to any one of the preceding claims, in which the comparing the two path profiles in relation to one another comprises searching for a time at which either both path profiles have a common intersection point or the own vehicle and the object in front have a minimum distance (Dᵣₑₛₜ) from one another.

10. The method according to the preceding claim, in which, if an intersection of the two path profiles is present, (i) the time (T_{K}) of the intersection, (ii) the residual path up to collision and/or the residual velocity at the time of the potential collision, and (iii) the velocity reduction (Δ_{V}) up to the time of the potential collision are determined, and
if the path profiles do not intersect, but the own vehicle and the object in front have a minimal distance (Dᵣₑₛₜ) from one another, (i) the residual distance (Dᵣₑₛₜ) between the own vehicle and object in front at this time (T_{mindist}) and/or (ii) the velocity reduction (Δ_{V}) of the own vehicle up to the time (T_{mindist}) are determined.

11. The method according to any one of the preceding claims, in which the determining a velocity reduction (Δ_{V}) takes place on the basis of the times determined previously, and wherein preferably the velocity reduction (Δ_{V}) of the own vehicle takes account of a real system response of the own vehicle in the event of an emergency braking request and the velocity reduction (Δ_{V}) up to attainment of the residual distance (Dᵣₑₛₜ) from one another at the time (T_{mindist}) is determined by integration of the acceleration of the own vehicle between the integration limits t=0 and t=T_{mindist}.

12. The method according to any one of the preceding claims, in which a first condition for initiation of a driver-independent emergency braking process is falling below a specifiable minimum distance (D_{Schwelle}) between the own vehicle and the object in front, and/or
in which a second condition for initiation of an emergency braking process is falling below a specifiable velocity reduction (Δ_{VSchwelle}) of the own vehicle up to the collision time t=T_{K}, at which the own vehicle collides with the object in front.

13. The method according to any one of the preceding claims, in which a time for a warning or other collision-preparatory measures is established sooner or later depending on driver activities, the current driving scenario and current environmental conditions.

14. The method according to any one of the preceding claims, in which additionally or alternatively to delivering a warning to the driver of the own vehicle an optical and/or acoustic warning to the following road users is emitted.

## Revendications

1. Procédé de prévention de collision avec un objet se trouvant devant le véhicule d'un conducteur, ledit procédé comprenant les étapes suivantes:
- la prédéfinition d'un profil d'accélération (a_{VOR,E}) dépendant de grandeurs de conduite dudit véhicule ;
- l'adoption d'une évolution temporelle d'une accélération à prévoir dudit véhicule (a_{VOR,E}) sur la base de son accélération (a_{AKT,E}) au moment considéré ;
- la détermination d'un profil de trajectoire (s_{E}) dudit véhicule à partir de l'évolution temporelle de l'accélération à prévoir (a_{VOR,E}) ;
- la détection d'une distance (dist_{AKT,V}) momentanée et d'une vitesse relative (vrel_{AKT,V}) momentanée d'un objet se trouvant devant ledit véhicule ;
- l'adoption d'une évolution temporelle d'une accélération à prévoir de l'objet (a_{VOR,V}) se trouvant devant sur la base de son accélération (a_{AKT,V}) au moment considéré ;
- la détermination d'un profil de trajectoire de l'objet (s_{V}) à partir de l'évolution temporelle de l'accélération (a_{VOR,V}) à prévoir ;
- la comparaison du profil de trajectoire (s_{E}) dudit véhicule avec le profil de trajectoire (s_{V}) de l'objet se trouvant devant, et
- la détermination d'un moment de collision (T_{K}) anticipé dudit véhicule avec l'objet, dans le cas où les deux profils de trajectoire (s_{E}, s_{V}) se coupent ou dans le cas où la vitesse dudit véhicule coïncide au moins dans une plage de tolérances avec celle de l'objet,
- la comparaison d'un moment de collision (T_{Schwelle}) avec le moment de collision anticipé spécifique ; et la détermination de la distance restante (Dᵣₑₛₜ) dudit véhicule par rapport à l'objet ainsi que de la perte de vitesse (Vᵣₑₛₜ) jusqu'à ce moment, dans le cas où la vitesse du véhicule coïncide au moins dans une plage de tolérances avec celle de l'objet se trouvant devant, et
- l'enclenchement d'un freinage (d'urgence) indépendant du conducteur, dans le cas où la perte de vitesse et la distance restante descendent respectivement en dessous d'une certaine valeur.

2. Procédé selon la revendication précédente, dans le cadre duquel la prédéfinition d'un profil d'accélération (a_{VOR,E}) dépendant de grandeurs de conduite du véhicule tient compte d'une accélération (a_{AKT,E}) momentanée détectée ou calculée et/ou d'une vitesse (v_{AKT,E}) momentanée calculée ou détectée du véhicule.

3. Procédé selon l'une des revendications précédentes, dans le cadre duquel il y a détermination de la vitesse résiduelle du véhicule par rapport à l'objet se trouvant devant au moment de collision (T_{K}) anticipé et de la perte de vitesse possible jusqu'au moment de collision (T_{K}) anticipé, dans le cas où le moment de collision (T_{K}) anticipé est antérieur au moment déterminé.

4. Procédé selon l'une des revendications précédentes, dans le cadre duquel l'adoption d'une évolution temporelle d'une accélération à prévoir de l'objet se trouvant devant comprend le calcul ou la détermination de la vitesse absolue momentanée de l'objet se trouvant devant et / ou de l'accélération momentanée absolue de l'objet.

5. Procédé selon l'une des revendications précédentes, dans le cadre duquel la comparaison du moment de collision (T_{Schwelle}) avec le moment de collision (T_{K}) anticipé spécifique du véhicule avec l'objet se trouvant devant comprend la détermination d'un moment de collision (T_{Schwelle}) antérieur au moment de collision anticipé (T_{K}).

6. Procédé selon l'une des revendications précédentes, dans le cadre duquel l'adoption d'une évolution temporelle d'une accélération à prévoir de l'objet pour une période prédéterminée peut, sur la base de son accélération au moment considéré et / ou à partir de l'évolution temporelle de l'accélération de l'objet se trouvant devant, avoir lieu durant une période d'une durée prédéterminée qui remonte dans le passé.

7. Procédé selon l'une des revendications précédentes, dans le cadre duquel l'adoption d'une évolution temporelle d'un profil d'accélération à prévoir et dépendant de grandeurs de conduite du véhicule peut, sur la base d'une réponse réelle du système du véhicule, avoir lieu lors d'une décélération de freinage d'urgence prédéterminée.

8. Procédé selon l'une des revendications précédentes, dans le cadre duquel la trajectoire du véhicule et la trajectoire de l'objet se trouvant devant sont déterminées à partir de l'évolution temporelle de l'accélération du véhicule et de celle de l'objet se trouvant devant.

9. Procédé selon l'une des revendications précédentes, dans le cadre duquel l'analyse des deux profils de trajectoire l'un par rapport à l'autre peut comporter la recherche d'un moment où, soit les deux profils de trajectoire présentent un point d'intersection commun, soit le véhicule et l'objet se trouvant devant présentent l'un par rapport à l'autre une distance (Dᵣₑₛₜ) minimale.

10. Procédé selon l'une des revendications précédentes, dans le cadre duquel sont déterminés (i) le moment (T_{K}) du point d'intersection, (ii) la distance restante jusqu'à la collision et/ou la vitesse résiduelle au moment de la collision potentielle et (iii) la perte de vitesse (Δ_{V}) jusqu'au moment de la collision potentielle, dans le cas où il existe un point d'intersection entre les deux profils de trajectoire, et dans le cadre duquel sont déterminés (i) la distance restante (Dᵣₑₛₜ) entre le véhicule et l'objet se trouvant devant et/ou (ii) la perte de vitesse (Δ_{V}) du véhicule jusqu'à cet moment (T_{mindist}), pour autant que les profils de trajectoire ne se coupent pas et que ledit véhicule et celui qui le précède se trouvent l'un par rapport à l'autre à une distance (Dᵣₑₛₜ) minimale.

11. Procédé selon l'une des revendications précédentes, dans le cadre duquel la détermination d'une perte de vitesse (Δ_{V}) intervient sur la base des moments précédemment déterminés, dans le cadre duquel préférentiellement la perte de vitesse (Δ_{V}) du véhicule (Δ_{V}) tient compte d'une réponse réelle du système du véhicule lors d'une demande de freinage d'urgence, et dans le cadre duquel la perte de vitesse (Δ_{V}) jusqu'à atteinte de la distance restante (Dᵣₑₛₜ) relative au moment (T_{mindist}) est déterminée par intégration de l'accélération du véhicule entre les limites d'intégration t = 0 et t = T_{mindist}.

12. Procédé selon l'une des revendications précédentes, dans le cadre duquel le sous-dépassement d'une distance minimale (D_{Schwelle}) prédéfinissable entre le véhicule et l'objet se trouvant devant constitue une première condition pour que soit enclenchée une opération de freinage d'urgence indépendante du conducteur consiste, et / ou
le sous-dépassement d'une perte de vitesse (ΔV_{Schwelle}) prédéfinissable du véhicule jusqu'au moment de collision t = T_{K}, où le véhicule entre en collision avec l'objet se trouvant devant, constitue une deuxième condition pour que soit enclenchée une opération de freinage d'urgence.

13. Procédé selon l'une des revendications précédentes, dans le cadre duquel il y a tôt ou tard détermination d'un moment pour l'émission d'un avertissement ou la mise en oeuvre d'autres mesures préparatoires à la collision, en fonction des actions effectuées par le conducteur, du scénario de conduite momentané et des conditions environnementales momentanées.

14. Procédé selon l'une des revendications précédentes, dans le cadre duquel il y a émission d'une alarme visuelle et / ou sonore aux usagers de la route suivants, en plus ou à la place de l'avertissement émis à l'intention du conducteur du véhicule.
